(19) Europäisches Patentamt / European Patent Office / Office européen des brevets

(11) **EP 4 132 880 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **21728005.6**

(22) Anmeldetag: **05.05.2021**

(51) Internationale Patentklassifikation (IPC):
**C01B 32/40** [(2017.01)]

(52) Gemeinsame Patentklassifikation (CPC):
**C01B 32/40;** Y02E 60/36; Y02P 20/133

(86) Internationale Anmeldenummer:
**PCT/EP2021/061823**

(87) Internationale Veröffentlichungsnummer:
**WO 2022/008117 (13.01.2022 Gazette 2022/02)**

(54) **VERFAHREN UND VORRICHTUNG ZUR HERSTELLUNG VON KOHLENMONOXID AUS KOHLENDIOXID**

METHOD AND DEVICE FOR PRODUCING CARBON MONOXIDE FROM CARBON DIOXIDE

PROCÉDÉ ET DISPOSITIF PERMETTANT LA PRODUCTION DE MONOXYDE DE CARBONE À PARTIR DE DIOXYDE DE CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2020 DE 102020208634
24.09.2020 DE 102020212022**

(43) Veröffentlichungstag der Anmeldung:
**15.02.2023 Patentblatt 2023/07**

(73) Patentinhaber: **Siemens Energy Global GmbH & Co. KG
81739 München (DE)**

(72) Erfinder:
• **REICHBAUER, Thomas
85391 Allershausen (DE)**
• **SCHMID, Günter
91334 Hemhofen (DE)**
• **KLINGER, Andre
90429 Nürnberg (DE)**
• **MUSAYEV, Yashar
90425 Nürnberg (DE)**

(56) Entgegenhaltungen:
• **SHAKERIAN FARID ET AL: "A comparative review between amines and ammonia as sorptive media for post-combustion CO2capture", APPLIED ENERGY, ELSEVIER SCIENCE PUBLISHERS, GB, Bd. 148, 27. März 2015 (2015-03-27), Seiten 10-22, XP029216545, ISSN: 0306-2619, DOI: 10.1016/J.APENERGY.2015.03.026**
• **KLANKERMAYER JÜRGEN ET AL: "Selektive katalytische Synthesen mit Kohlendioxid und Wasserstoff: Katalyse-Schach an der Nahtstelle zwischen Energie und Chemie", ANGEWANDTE CHEMIE, Bd. 128, Nr. 26, 20. Juni 2016 (2016-06-20), Seiten 7416-7467, XP055833050, DE ISSN: 0044-8249, DOI: 10.1002/ange.201507458**
• **JENS CHRISTIAN M. ET AL: "CO from CO 2 and fluctuating renewable energy via formic-acid derivatives", GREEN CHEMISTRY, Bd. 18, Nr. 20, 1. Januar 2016 (2016-01-01), Seiten 5621-5629, XP055833053, GB ISSN: 1463-9262, DOI: 10.1039/C6GC01202G**

**Beschreibung**

Die vorliegende Erfindung betrifft ein Verfahren und eine Vorrichtung zur Herstellung von CO aus $CO_2$, bei dem bzw. der die Reaktion über ein Formiat der Formel $HNR_1R_2H^+ HCO_2^-$ und/oder ein Amid der Formel $HCONR_1R_2$ verläuft, wobei $R_1$ und $R_2$ gleich oder verschieden sind und ausgewählt sind aus Wasserstoff und substituierten und unsubstituierten Alkylresten mit 1 bis 20 C-Atomen.

Der hierin beschriebene Stand der Technik basiert auf dem den Erfindern bekannten Wissen und stellt nicht unbedingt den aus der Literatur bekannten Stand der Technik dar, sodass sich in der nachfolgenden Beschreibung des Stands der Technik auch Passagen befinden können, die nicht nur der zitierten Literatur entnommen werden können, sondern auch auf Weiterentwicklungen der Erfinder basieren können und somit nicht zwangsläufig allgemeinen Stand der Technik darstellen.

Durch die Verbrennung von fossilen Brennstoffen wird momentan etwa 80% des weltweiten Energiebedarfs gedeckt. Durch diese Verbrennungsprozesse wurden im Jahr 2011 weltweit circa 34.032,7 Millionen Tonnen Kohlenstoffdioxid ($CO_2$) in die Atmosphäre emittiert. Diese Freisetzung ist der einfachste Weg, auch große Mengen an $CO_2$ (z.B. Braunkohlekraftwerke über 50.000 t pro Tag) zu entsorgen.

Die Diskussion über die negativen Auswirkungen des Treibhausgases $CO_2$ auf das Klima hat dazu geführt, dass über eine Wiederverwertung von $CO_2$ nachgedacht wird. Thermodynamisch gesehen liegt $CO_2$ energetisch sehr niedrig und kann daher nur schwer wieder zu brauchbaren Produkten reduziert werden. Jedoch gibt es Ansätze, $CO_2$ in Elektrolyseuren elektrochemisch zu reduzieren und damit Wertstoffe in der Chemie her- und bereitzustellen, und gleichzeitig das vorhandene $CO_2$ zu verringern.

In der Natur wird das $CO_2$ durch Photosynthese zu Kohlenhydraten umgesetzt. Dieser zeitlich und auf molekularer Ebene räumlich in viele Teilschritte aufgegliederte Prozess ist nur sehr schwer großtechnisch kopierbar. Den im Vergleich zur reinen Photokatalyse momentan effizienteren Weg stellt die elektrochemische Reduktion des $CO_2$ dar. Eine Mischform ist die lichtunterstütze Elektrolyse bzw. die elektrisch unterstützte Photokatalyse. Beide Begriffe sind synonym zu verwenden, je nach Blickwinkel des Betrachters.

Derzeit werden einige mögliche Wege zur Herstellung von Energieträgern und chemischen Grundstoffen auf Basis regenerativer Energien diskutiert. Als besonders erstrebenswert gilt die direkte elektrochemische oder photochemische Umsetzung von $CO_2$ in Kohlenwasserstoffe oder deren Sauerstoff-Derivate.

Es hat sich jedoch als schwierig erwiesen, industrietaugliche Katalysatoren zur Herstellung der Kohlenwasserstoffe oder Oxygenate für diese direkten Routen zu finden. Es sind daher auch mehrstufige Routen in der Diskussion, die durch den höheren technischen Reifegrad der Einzelschritte eine zeitnahe Lösung in Aussicht stellen.

Das wichtigste Intermediat in diesen mehrstufigen Wertschöpfungsketten ist dabei CO. Es wird gemein hin als wichtigster C1 Baustein der synthetischen Chemie betrachtet. Als Synthesegas-Gemisch ($H_2$/CO > 2/1) mit Wasserstoff kann es über den Fischer-Tropsch-Prozess zum Aufbau von Kohlenwasserstoffen und zur Methanol-Synthese verwendet werden. CO-reichere Gasgemische oder reines CO werden außerdem für Carbonylierungsreaktionen wie die Hydroformylierung oder die Carbonsäuresynthese (Alkohol-Carbonylierung), bei denen die primäre ungesättigte Kohlenstoffkette verlängert wird, benötigt.

Wenn also Möglichkeiten bestehen, CO aus $CO_2$ unter Einbeziehung regenerativer Energiequellen zu erzeugen, eröffnet dies eine Vielzahl von Möglichkeiten, die fossilen Rohstoffe als Kohlenstoffquelle in vielen chemischen Produkten teilweise oder vollständig zu ersetzen.

Eine mögliche Route ist die elektrochemische Zerlegung von $CO_2$ in CO und $O_2$. Dabei handelt es sich um ein einstufiges Verfahren. Dies großtechnisch umzusetzen ist eine Herausforderung, da sowohl z.T. genutzte Materialien (z.B. anionleitende Membranen) noch nicht auf die $CO_2$ Elektrolyse optimiert sind, als auch weiter Forschungsbedarf für Elektroden, z.B. Gasdiffusionselektroden, besteht.

Bisher ist Rohöl oder Kohle die volumenmäßig bedeutendste industrielle Kohlenstoffquelle. Um oxidierten Kohlenstoff, meist $CO_2$, oder Carbonat, in eine reduzierte Form zu überführen, wird Energie benötigt. Nur Kohlenstoff in reduzierter Form ist für eine industrielle Nutzung als Ersatz für fossile Quellen interessant.

Zwar gibt es Ansätze, $CO_2$ elektrochemisch zu Formiat/CO oder Kohlenwasserstoffe umzusetzen, jedoch werden diese Verfahren bisher üblicherweise noch im Labormaßstab entwickelt. Zudem ist die Energieeffizienz solcher Anlagen generell nicht sehr hoch (<=50%), wie in Liu et al.; (2018), "CO2 Electrolysis to CO and O2 at High Selectivity, Stability and Efficiency Using Sustainion Membranes"; Journal of Electrochemical Society, 165 (15) J3371 - J3377 (2018) beschrieben, oder auch in US 9181625 B2, US 9555367 B2, US 8562811 B2 offenbart. SHAKERIAN FARID ET AL., APPLIED ENERGY, Bd. 148, 27. März 2015, Seiten 10-22, untersucht verschiedene Verfahren zur Absorption von Kohlendioxid mit Aminen und Ammoniak. Klankermayer Jürgen ET AL., Angewandte Chemie, Bd. 128, Nr. 26, 20. Juni 2016 , Seiten 7416-7467, beschreibt die Produktion von Formamiden. Jens Christian M. ET AL.,Green Chemistry, Bd. 18, Nr. 20, 1. Januar 2016, Seiten 5621-5629,schlägt vor, CO2 in sog. Speichermolekülen ("Storage Molecules") zu lagern.

Daher soll ein alternativer Weg zur Herstellung, Speicherung und den Transport von CO aus $CO_2$ aufgezeigt

werden, der großtechnisch realisierbar und skalierbar ist.

Die Erfinder haben hierbei ein Konzept gefunden, wie CO aus $CO_2$ über eine Zwischenspeicherung in einer Verbindung gewonnen werden kann, aus der CO auf einfache Weise an einem erwünschten Ort freigesetzt werden kann und mit ausreichender Reinheit weiter verwendet werden kann. Die vorliegende Erfindung stellt ein alternatives Verfahren - im Vergleich zur $CO_2$-Elektrolyse - zur Umsetzung von $CO_2$ zu Kohlenmonoxid (CO) bereit, welches auch im Volumen skalierbar und somit industrietauglich ist.

In einem ersten Aspekt betrifft die vorliegende Erfindung ein Verfahren zur Herstellung von CO aus $CO_2$, umfassend,

a) Reagieren von $CO_2$ mit Wasser und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$;

b) Reagieren des Hydrogencarbonat der Formel $HNR_1R_2H^+ HCO_3^-$ mit Wasserstoff zu einem Formiat der Formel $HNR_1R_2H^+ HCO_2^-$;

c) Zersetzung des Formiats der Formel $HNR_1R_2H^+ HCO_2^-$ zu einem Amid der Formel $HCONR_1R_2$ und $H_2O$;

d) Zersetzung des Amids der Formel $HCONR_1R_2$ zu CO und einem Amin der Formel $HNR_1R_2$, wobei eine Mischung umfassend das Amin der Formel $HNR_1R_2$ und CO entsteht; und

e) zumindest teilweise Reagieren des Amins der Formel $HNR_1R_2$ in der Mischung umfassend das Amin der Formel $HNR_1R_2$ und CO mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und Abtrennen des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht.

Zudem ist ein weiterer Aspekt der vorliegenden Erfindung auf eine Vorrichtung zur Herstellung von CO aus $CO_2$ gerichtet, umfassend:

- einen ersten Reaktor zur Reaktion von $CO_2$ mit $H_2O$ und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$, der dazu ausgebildet ist $CO_2$ mit $H_2O$ und einem Amin der Formel $HNR_1R_2$ zu reagieren;
- einen zweiten Reaktor zur Reaktion des Hydrogencarbonats der Formel $HNR_1R_2H^+ HCO_3^-$ mit Wasserstoff zu einem Formiat der Formel $HNR_1R_2H^+ HCO_2^-$, der dazu ausgebildet ist, das Hydrogencarbonat der Formel $HNR_1R_2H^+ HCO_3^-$ mit Wasserstoff zu einem Formiat der Formel $HNR_1R_2H^+ HCO_2^-$ zu reagieren; weiter umfassend
- einen dritten Reaktor zur Zersetzung des Formiats der Formel $HNR_1R_2H^+ HCO_2^-$ zu $H_2O$ und einem Amid der Formel $HCONR_1R_2$, der dazu ausgebildet ist, das Formiat der Formel $HNR_1R_2H^+ HCO_2^-$ zu $H_2O$ und einem Amid der Formel $HCONR_1R_2$ zu zersetzen, und
- einen vierten Reaktor zur Zersetzung des Amids der Formel $HCONR_1R_2$ zu CO und einem Amin der Formel $HNR_1R_2$, der dazu ausgebildet ist, das Amid der Formel $HCONR_1R_2$ zu CO und einem Amin der Formel $HNR_1R_2$ zu zersetzen; oder
- einen kombinierten dritten Reaktor zur Zersetzung des Formiats der Formel $HNR_1R_2H^+ HCO_2^-$ zu $H_2O$, CO und einem Amin der Formel $HNR_1R_2$, der dazu ausgebildet ist, das Formiat der Formel $HNR_1R_2H^+ HCO_2^-$ zu $H_2O$, CO und einem Amin der Formel $HNR_1R_2$ zu zersetzen; weiter umfassend
- einen fünften Reaktor zur zumindest teilweisen Reaktion des im kombinierten dritten Reaktor oder im vierten Reaktor erzeugten Amins der Formel $HNR_1R_2$ mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und zur Abtrennung des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht, wobei der fünfte Reaktor dazu ausgebildet ist, das im kombinierten dritten Reaktor oder im vierten Reaktor erzeugte Amin der Formel $HNR_1R_2$ mit einem Fällungsreagenz, bevorzugt mit $CO_2$, zumindest teilweise zur Reaktion zur bringen, wobei eine Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt eine Mischung umfassend CO, ein Hydrogencarbonat der Formel $HNR_1R_2H^+ HCO_3^-$ und ggf. unreagiertes Amin der Formel $HNR_1R_2$, hergestellt wird, und wobei der fünfte Reaktor zudem dazu ausgebildet ist, das Fällungsprodukt der Reaktion des Amins der Formel $HNR_1R_2$ mit dem Fällungsreagenz, bevorzugt das Hydrogencarbonat der Formel $HNR_1R_2H^+ HCO_3^-$, abzu-

trennen.

Weitere Aspekte der vorliegenden Erfindung sind den abhängigen Ansprüchen und der detaillierten Beschreibung zu entnehmen.

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

Figur 1 zeigt schematisch die Reaktionsabläufe bis zur Herstellung von CO in einem beispielhaften erfindungsgemäßen Verfahren.

In Figur 2 ist ein weiteres beispielhaftes Verfahren ohne die CO-Aufreinigung schematisch gezeigt, in dem auch die Rolle eines Amids als Speicher und Transportmöglichkeit für CO verdeutlicht wird.

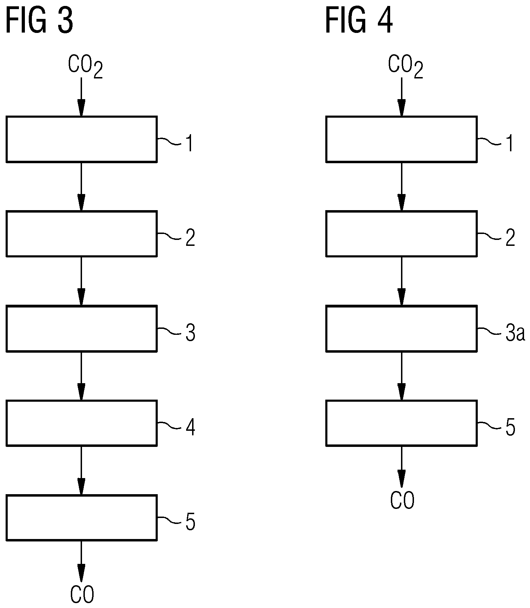

Aus Figuren 3 bis 7 sind schematisch dargestellte, beispielhafte erfindungsgemäße Verfahren zu entnehmen.

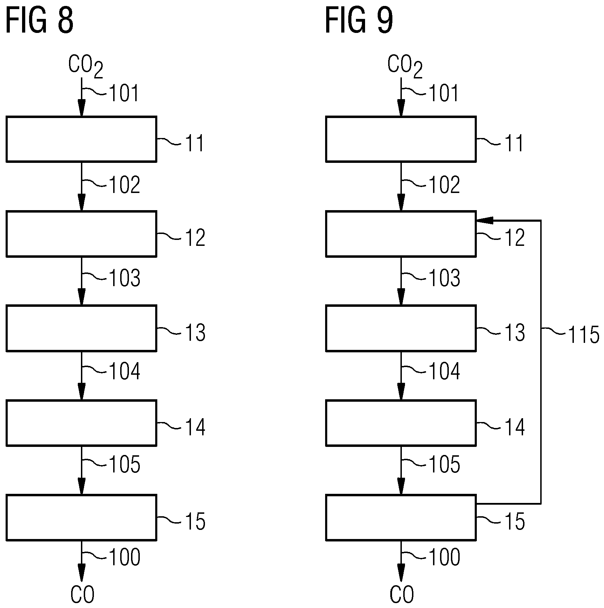

In Figuren 8 bis 17 sind schematisch beispielhafte erfindungsgemäße Vorrichtungen gezeigt.

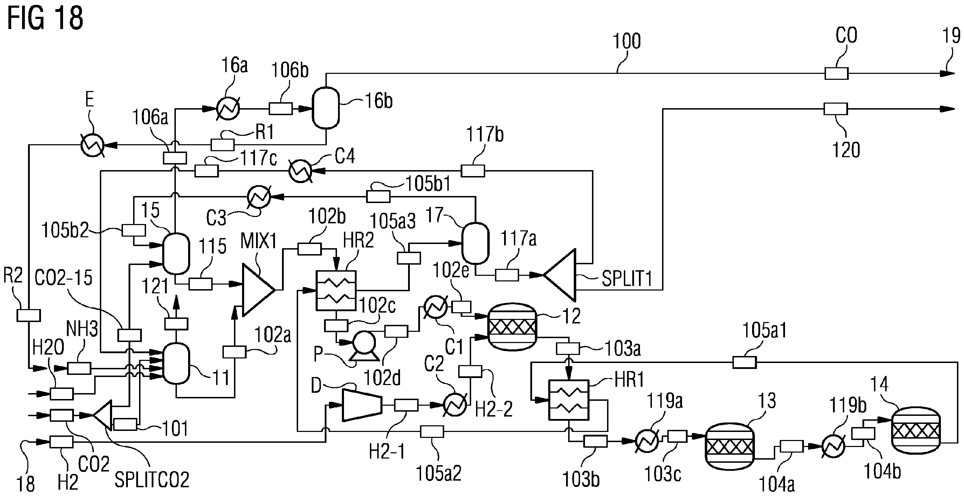

In Figur 18 ist zudem schematisch eine Vorrichtung eines Beispiels der vorliegenden Erfindung dargestellt.

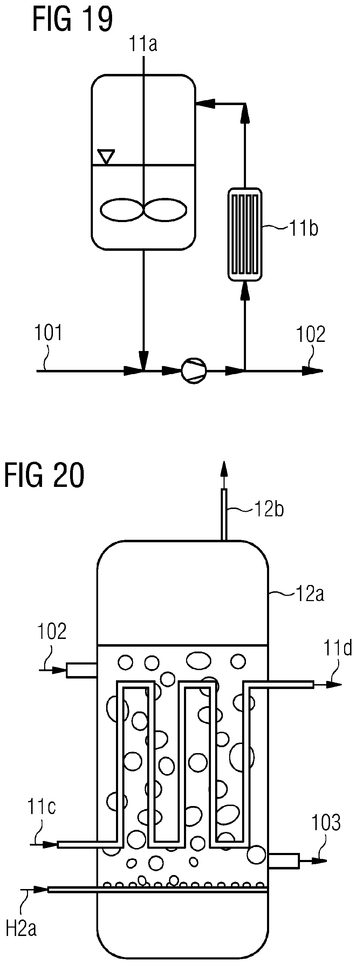

Figur 19 zeigt schematisch einen beispielhaften ersten Reaktor, und Figur 20 schematisch einen beispielhaften zweiten Reaktor.

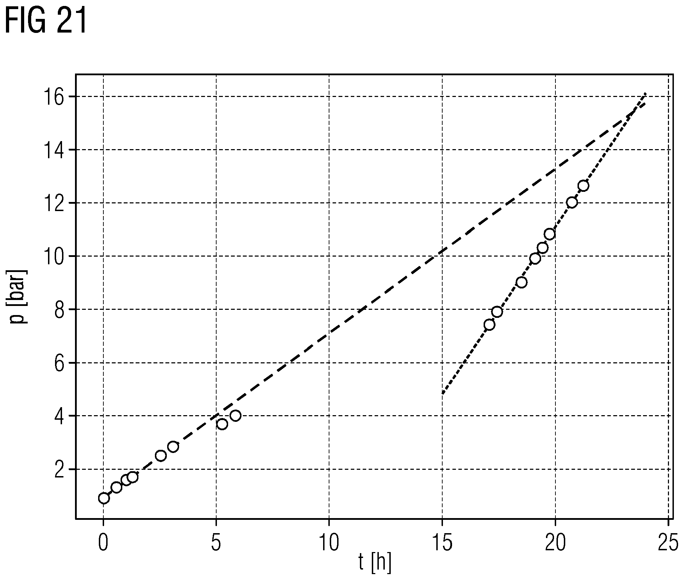

In Figur 21 sind Ergebnisse des Versuchs 2 von Beispiel 3 dargestellt.

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

In der Anmeldung beziehen sich Mengenangaben auf Gew.%, soweit es nicht anderweitig angegeben oder aus dem Zusammenhang ersichtlich ist.

Das Amid der Formel $HCONR_1R_2$ ist ein Amid der Ameisensäure, und umfasst Formamid wie auch N-Alkyl- sowie N,N-Dialkylderivate des Formamids.

Der Normaldruck ist 101325 Pa = 1,01325 bar.

Ein erster Aspekt der vorliegenden Erfindung betrifft ein Verfahren zur Herstellung von CO, umfassend,

a) Reagieren von $CO_2$ mit Wasser und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$;

b) Reagieren des Hydrogencarbonat der Formel $HNR_1R_2H^+ HCO_3^-$ mit Wasserstoff zu einem Formiat der Formel $HNR_1R_2H^+ HCO_2^-$;

c) Zersetzung des Formiats der Formel $HNR_1R_2H^+ HCO_2^-$ zu einem Amid der Formel $HCONR_1R_2$ und $H_2O$;

d) Zersetzung des Amids der Formel $HCONR_1R_2$ zu CO und einem Amin der Formel $HNR_1R_2$, wobei eine Mischung umfassend das Amin der Formel $HNR_1R_2$ und CO entsteht; und

e) zumindest teilweise Reagieren des Amins der Formel $HNR_1R_2$ in der Mischung umfassend das Amin der Formel $HNR_1R_2$ und CO mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und Abtrennen des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht.

Besonders bevorzugt sind die Ammoniakderivate Ammoniumformiat und Formamid als Zwischenstufen, ausgehend von Ammoniak.

Wie aus dem obigen ersichtlich finden im erfindungsgemäßen Verfahren die Schritte a), b), c), d) und e) in dieser Reihenfolge statt, wobei jedoch nicht ausgeschlossen ist, dass bestimmte Schritte kombiniert werden und beispielsweise in einem Reaktor stattfinden, beispielsweise Schritte c) und d) (keine Isolierung des Amids der Formel $HCONR_1R_2$) und/oder Schritte a) und b) oder Schritte b) und c), etc.

Im beschriebenen Verfahren werden Amine mit maximal 2 von H unterschiedlichen Resten, also Ammoniak, primäre und/oder sekundäre Amine, als Mediatoren genutzt, woraus sich besondere Vorteile des Verfahrens in Bezug auf Herstellung, Transport und Speicherung von CO ergeben, wie nachfolgend weiter beschrieben. Aus der Prozesssequenz zur Herstellung von CO in verschiedenen Prozessen mit Hilfe von Aminen ergeben sich weitere Vorteile, wie beispielsweise eine einfachere Lagerung und Transport eines gebildeten Intermediats, z.B. eines Amids. Das Verfahren stellt hier folglich keine einfache Aneinanderreihung von Schritten dar, sondern die Schritte ergänzen sich synergistisch, sowohl in materieller wie auch in energetischer Sicht, und ergeben ein effizienteres Verfahren zur Überführung von $CO_2$

zu CO im Vergleich zu Verfahren des Stands der Technik, wie ebenfalls noch weiter ausgeführt. Zudem kann das eingesetzte Amin als Intermediat wiedergewonnen werden und/oder gemäß bevorzugten Ausführungsformen in Schritt e) vorteilhaft zu einem Hydrogencarbonat der Formel $HNR_1R_2H^+ HCO_3^-$ umgesetzt werden, sodass es wieder verfügbar ist und/oder in das Verfahren auch als Zwischenprodukt wieder eingesetzt werden kann und somit gemäß bestimmten Ausführungsformen als einziges Beiprodukt im Bestfall nur Sauerstoff aus einer Wasserelektrolyse anfällt.

Im erfindungsgemäßen Verfahren ist der Schritt a) des Reagierens von $CO_2$ mit Wasser und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, wobei $R_1$ und $R_2$ auch einen Ring bilden können, zu einem Hydrogencarbonat der Formel $HNR_1R_2H^+ HCO_3^-$ nicht besonders beschränkt. Beispielsweise kann hierbei $CO_2$ aus einer Verbrennung einer kohlenstoffhaltigen Substanz erhalten werden und/oder auch aus der Luft auf geeignete Weise gewonnen werden. Beispielsweise stellen Aminwäschen gängige Methoden dar, um beispielsweise $CO_2$ aus Rauchgasen zu waschen. Nach dem Aufarbeiten des Waschreagens kann das Hydrogencarbonat des sekundären Amins direkt in das entsprechende Amid der Ameisensäure, beispielsweise Formamid im Falle vom Ammoniak, umgewandelt werden.

Bei Schritt a) kann, je nach eingesetztem Amin, Ammoniumhydrogencarbonat ($NH_4^+ HCO_3^-$), ein substituiertes oder unsubstituiertes Alkylammoniumhydrogencarbonat der Formel $H_2NR_1H^+ HCO_3^-$ und/oder ein substituiertes oder unsubstituiertes Dialkylammoniumhydrogencarbonat der Formel $HNR_1R_2H^+ HCO_3^-$ erzeugt werden, wobei bei letzteren beiden Fällen $R_1$ und $R_2$ nicht H sind. Obgleich es nicht ausgeschlossen ist, dass Gemische von mehreren Aminen in Schritt a) mit $CO_2$ und Wasser reagieren gelassen werden, ist es bevorzugt, nur ein Amin der Formel $HNR_1R_2$ mit $CO_2$ und Wasser zu reagieren, insbesondere Ammoniak.

Das Amin der Formel $HNR_1R_2$ kann in Schritt a) beliebig ausgewählt werden. Gemäß bestimmten Ausführungsformen sind $R_1$ und $R_2$ ausgewählt aus H und/oder substituierten und/oder unsubstituierten, beispielsweise unsubstituierten, Alkylresten mit 1 bis 10 C-Atomen, weiter bevorzugt 1 bis 8 C-Atomen, weiter bevorzugt 1 bis 6 C-Atomen, weiter bevorzugt 1 bis 4 C-Atomen, insbesondere bevorzugt 1 bis 2 C-Atomen, wobei $R_1$ und $R_2$ auch einen Ring bilden können, beispielsweise mit 2 bis 20, bevorzugt 3 bis 10, insbesondere 3 bis 6 C-Atomen, wobei $R_1$ und $R_2$ gleich oder verschieden sein können, beispielsweise gleich sind. Die Alkylreste können hierbei linear, verzweigt und/oder zyklisch sein und/oder auch einen Ring bilden. So Substituenten im Alkylrest vorhanden sind, sind diese nicht besonders beschränkt, wobei bei den Dialkylaminen nicht ausgeschlossen ist, dass nur ein Alkylrest substituiert ist. Als Substituenten sind insbesondere hydrophile Gruppen, beispielsweise Hydroxyl-, Amino-, Carboxyl-, und/oder Sulfogruppen ($-SO_3H$) bevorzugt, wobei Hydroxylgruppen weiter bevorzugt sind aufgrund ihrer Wechselwirkung mit Wasser, welches ebenfalls zur Reaktion mit dem $CO_2$ verwendet wird.

Beispiele für geeignete Alkylreste sind beispielsweise Methyl-, Hydroxymethyl-, Ethyl-, Hydroxyethyl-, Propyl-, Hydroxypropyl-, Butyl-, Hydroxybutyl-, Aminomethyl-, Aminoethyl-, Aminopropyl- und Aminobutylgruppen, bevorzugt Methyl-, Hydroxymethyl-, Ethyl- und Hydroxyethylgruppen. Beispielsweise sind also bevorzugte Amine Ammoniak, Methylamin, Dimethylamin, Ethylamin, Diethylamin, Ethylmethylamin, n-Propylamin, Isopropylamin, Di-n-propylamin, Di-n-isopropylamin, n-Butylamin, Di-n-butylamin, Pyrrolidin, Piperidin, usw., zu nennen, wobei beispielsweise Diethylamin, n-Propylamin, n-Butylamin, Pyrrolidin und Piperidin hinsichtlich des Aggregatszustands bei Raumtemperatur von ca. 20°C und der Löslichkeit in Wasser bevorzugt sein können, wohingegen beispielsweise Ammoniak aus energetischer Sicht vorteilhaft ist, wie nachfolgend noch genauer erörtert. Darüber hinaus können Ammoniak und Alkylamine hinsichtlich einer Zersetzung eines erzeugten Amids bevorzugt sein. Gemäß bestimmten Ausführungsformen sind $R_1$ und $R_2$ Wasserstoff, wird als Amin also Ammoniak verwendet.

Beispielhaft mögliche Amine sind in Tabelle 1 mit ihren Siepunkten und Löslichkeiten in Wasser einzusehen, wobei das Amin nicht darauf beschränkt ist. Wie aus Tabelle 1 ersichtlich ist können verschiedenste Amine genutzt werden, wobei $R_1$ und $R_2$ unabhängig sein können.

Tabelle 1: Auflistung beispielhafter Amine und deren Siedepunkt und Löslichkeit in Wasser bei ca. 20°C.

| | Siedepunkt [°C] | Löslichkeit in Wasser bei ca. 20°C [g/l] |
|---|---|---|
| $NH_3$ | -33 | 541 |
| | | |
| Dimethylamin | 7 | 1540 |
| Diethylamin | 56 | Beliebig mischbar |
| Di-n-propylamin | 105 | 30 |
| Di-n-butylamin | 161 | 4 |
| | | |

(fortgesetzt)

|  | Siedepunkt [°C] | Löslichkeit in Wasser bei ca. 20°C [g/l] |
|---|---|---|
| Methylamin | -6,3 | 1080 |
| Ethylamin | 16 | Beliebig mischbar |
| n-Propylamin | 49 | Beliebig mischbar |
| n-Butylamin | 68 | Beliebig mischbar |
|  |  |  |
| Pyrrolidin | 87 | Beliebig mischbar |
| Piperidin | 106 | Beliebig mischbar |

Gemäß bestimmten Ausführungsformen weist das Amin einen hohen Siedepunkt von mehr als 25°C, bevorzugt 30°C oder mehr, auf, um flüssig transportiert werden zu können, und/oder eine Löslichkeit in Wasser bei 20°C von wenigstens 100 g/l, bevorzugt wenigstens 500 g/l, auf, um als Lösung in Wasser gut transportiert werden zu können, insbesondere im Hinblick auf eine Wiederverwendung nach Schritt d) in einem erneuten Schritt a).

Bei der Wahl eines geeigneten Amins mit hohen Siedepunkten kann das Produkt CO einfach gewonnen werden, indem es als Gas vom flüssigen Amin abgetrennt wird. Falls der Siedepunkt über der benötigten Zersetzungstemperatur des Amids liegt, so würde das Amin bereits flüssig zurückbleiben und reines CO entweicht, was bevorzugt wird.

Falls der Siedepunkt jedoch darunter liegt, so sollte dieser bevorzugt zwischen 30 - 180 °C liegen, vorteilhaft zwischen 100 - 180 °C, da bei der Abdestillation des Amins keine hohen Kühlanstrengungen benötigt werden. Jedoch ist bei der Wahl des Amins auch auf die Löslichkeit/Mischbarkeit in/mit Wasser zu achten, um Schritt a) nicht zu verlangsamen.

Gemäß bestimmten Ausführungsformen findet Schritt a) in einem Lösungsmittel statt, welches nicht besonders beschränkt ist. Auch die Schritte b), c), d) und/oder e) können in einem Lösungsmittel stattfinden, wobei bevorzugt zumindest Schritte a) bis d) in einem Lösungsmittel stattfinden. Das Lösungsmittel ist hierbei nicht besonders beschränkt, ist bevorzugt jedoch hydrophil und umfasst beispielsweise Wasser oder Gemische mit Wasser. Bevorzugt als Lösungsmittel ist Wasser.

Gemäß bestimmten Ausführungsformen ist der Anteil an Lösungsmittel, insbesondere Wasser, in Schritt a) möglichst gering, um den Energieaufwand der Folgeprozesse gering zu halten, beispielsweise derart, dass die Menge unterhalb der Menge an Lösungsmittel, insbesondere Wasser, liegt, bei der eine Sättigung des Hydrogencarbonats der Formel $HNR_1R_2H^+ HCO_3^-$ im Lösungsmittel, insbesondere Wasser, auftritt. Entsprechend kann in solchen Fällen in Schritt a) eine Suspension bzw. ein Slurry entstehen. Ggf. kann hier eine eingebrachte Menge an Lösungsmittel, z.B. Wasser, geeignet eingestellt werden, oder es kann auch Lösungsmittel, z.B. Wasser, zum Teil entfernt werden, beispielsweise wenn das $CO_2$ aus der Luft bereitgestellt wird, z.B. bei einem Carbon Capture Prozess.

Prinzipiell ist Schritt a) somit beispielsweise mit einer konventionelle Aminwäsche vergleichbar. Im Gegensatz zu dieser unterscheidet sich der Schritt a) des erfindungsgemäßen Verfahrens jedoch bevorzugt durch den Lösungsmittel, insbesondere Wasser-, und/oder $CO_2$-Anteil. In der konventionellen Aminwäsche sind die $CO_2$- und Aminbeladungen, z.B. Ammoniakbeladungen, gemäß bevorzugten Ausführungsformen deutlich kleiner, und damit der Wasseranteil größer. Vorliegend wird jedoch bevorzugt eine größere Menge an $CO_2$ und Amin eingebracht, beispielsweise 20-30 Gew.% Amin, z.B. Ammoniak, und 20 bis 45 Gew.% $CO_2$, z.B. ca. 30 bis 40 Gew.% $CO_2$, sodass sich ein Verhältnis von Absorbat (Amin, z.B. Ammoniak, und $CO_2$) und Absorbens (Lösungsmittel, z.B. Wasser) von mindestens 1:1 (Gew.) ergeben kann. Vorliegend kann beispielsweise ein Massenverhältnis von Amin der Formel $HNR_1R_2$ zu Lösungsmittel, beispielsweise Ammoniak zu Wasser, in einem Bereich von 1:0,5 bis 1:4, bevorzugt 1:1 bis 1:2, beispielsweise in einem überstöchiometrischen Verhältnis von 1: 1,4, liegen, um eine Förderung von reinem Feststoff zu nachfolgenden Schritten zu vermeiden. Bevorzugt ist zudem ein im Wesentlichen stöchiometrisches Verhältnis von Amin der Formel $HNR_1R_2$ zu $CO_2$, beispielsweise in einem Stoffmengenverhältnis von 2:1 bis 1:2, bevorzugt 1,5:1 bis 1:1,5, beispielsweise ungefähr 1:1.

So das erfindungsgemäße Verfahren für ein Carbon-Capture aus der Luft verwendet wird, was auch beim erfindungsgemäßen Verfahren umfasst ist, sind üblicherweise höhere Mengen an Lösungsmittel, z.B. Wasseranteile, notwendig, da die Partialdrücke des $CO_2$ deutlich kleiner sind und sich damit im Gleichgewicht kleinere Konzentrationen in der wässrigen Phase einstellen, sodass sich beispielsweise Verhältnisse von Absorbat zu Absorbens von 1:2-4 ergeben können. Für einen gleichen Produktmassenstrom an Hydrogencarbonat ist deshalb ein höherer Prozessmassenstrom erforderlich. Mit einem höheren Anteil an Lösungsmittel, z.B. einem höheren Prozesswasseranteil, steigt der prozesstechnische und energetische Aufwand zur Förderung bzw. zur thermischen Kontrolle des Prozesses. Entsprechend ist bei einem Carbon-Capture aus der Luft eine weitere Wärmeintegration im Prozess, beispielsweise hinsichtlich einer Wasserelektrolyse und/oder bei der Weiterverwendung des CO, z.B. in einer Fischer-Tropsch-Anlage bevorzugt. Alternativ oder zusätzlich kann bei einem Carbon-Capture-Prozess aus der Luft auch eine Reduzierung des Lösungsmittelanteils, z.B. Wasseranteils, durch eine mechanische oder gravimetrische Trennung erfolgen, z.B. durch Dekantieren oder eine Absetz-Zentrifugation. Hierbei ist jedoch eine Übersättung der Waschlösung bevorzugt. Ein Erwärmen zum Abdampfen des Lösungsmittels kann hier kontraproduktiv sein, da sich das Lösungsgleichgewicht entsprechend verschieben kann.

Auf Grund der schnellen Reaktionskinetik der, z.B. wässrigen, Bildungsreaktion des Ammoniumhydrogencarbonats aus Amin, z.B. wässrigem Ammoniak, und Kohlenstoffdioxid ist eine Stofftransportlimitierung des Prozesses in Schritt a) zu erwarten. Infolgedessen ist in Schritt a) ein Reaktor, in der erfindungsgemäßen Vorrichtung ein entsprechender erster Reaktor, mit möglichst großer Stoffaustauschoberfläche bevorzugt.

Gemäß bestimmten Ausführungsformen wird in Schritt a) eine Suspension hergestellt. Beispielsweise kann sich im Fall einer wasserarmen Konzeptionierung der Anlage ein in Schritt a) entstehendes Produktgemisch aus 5,6 $m^3$/Tag einer wässrigen Phase (mit Wasser als Lösungsmittel) und 17,3 $m^3$/Tag einer festen Phase (z.B. zum Großteil Ammoniumhydrogencarbonat bei Verwendung von Ammoniak als Amin) zusammensetzen. Hierfür ist dann gemäß bestimmten Ausführungsformen in Schritt a) ein erster Reaktor bevorzugt, der für ein breiförmiges und abrasives Produktgemisch geeignet ist.

Gemäß bestimmten Ausführungsformen ist ein erster Reaktor ein, bevorzugt kontinuierlicher, Kristallisator mit Gaseintragsrührer bzw. wird in Schritt a) ein solcher erster Reaktor eingesetzt. Ein beispielhafter erster Reaktor ist in Figur 19 gezeigt, mit einer ersten Leitung 101 bzw. einem Zufluss zu dieser, einer zweiten Leitung 102 bzw. einem Abfluss zu dieser, einem Gaseintragsrührer 11a und einem optionalen Wärmetauscher 11b zum Einstellen einer geeigneten Reaktionstemperatur. Wie hier gezeigt können Edukte kontinuierlich umgepumpt werden und das Produkt, Hy- drogencarbonat der Formel $HNR_1R_2H^+ HCO_3^-$, zum nächsten Schritt b) geleitet werden. Zur Förderung des breiartigen Gemisches eigenen sich beispielsweise rotierende Verdrängerpumpen, wie Exzenterschneckenpumpen.

Bei einer Betriebsweise in Schritt a) mit höherem Lösungsmittelanteil, z.B. Wasseranteil, wie es im Fall des Carbon-Captures der Fall ist, und einem damit geringeren Feststoffanteil, sind beispielsweise Packungskolonnen oder Blasensäulen mit einer hohen und hochdispergierten Gasphase als erster Reaktor gemäß bestimmten Ausführungsformen bevorzugt. Dies begünstigt durch die höhere Austauschoberfläche den Stofftransport in die flüssige Phase. Je nach Lösungsmittelanteil können hierbei rotierende Verdrängerpumpen mit höherem Fördervolumen wie beispielsweise Drehkolbenpumpen oder gar Kreiselpumpen zur Beförderung verwendet werden.

Durch den Einsatz anderer, beispielhaft der in Tabelle 1 aufgeführten Amine, ist es möglich, die Selektivität weiter zum Hydrogencarbonat zu erhöhen. Entsprechend der Verfügbarkeit der $CO_2$-Quelle ist ebenfalls eine druckaufgeladene Absorberkolonne als erster Reaktor gemäß bestimmten Ausführungsformen vorgesehen, welche eine Abscheidung des Hydrogencarbonats der Formel $HNR_1R_2H^+ HCO_3^-$, beispielsweise von Ammoniumhydrogencarbonat, begünstigt.

Gemäß bestimmten Ausführungsformen erfolgt die Herstellung des Hydrogencarbonats der Formel $HNR_1R_2H^+$ $HCO_3^-$ durch ein Einleiten von $CO_2$ oder einem Gas umfassend $CO_2$ (beispielsweise bei einer Rauchgaswäsche) in oder durch ein in Lösungsmittel gelöstes, insbesondere in Wasser gelöstes, oder im Wesentlichen (> 90 Gew.%, bevorzugt > 95 Gew.%, weiter bevorzugt > 99 Gew.%, bezogen auf das Amin) reines oder reines Amin $HNR_1R_2$. Es ist aber auch beispielsweise möglich, dass Lösungsmittel, z.B. Wasser, nicht vorgelegt wird, sondern beispielsweise zugegeben wird, beispielsweise auch in der Gasphase, z.B. als Wasserdampf, zu $CO_2$ oder einem $CO_2$-haltigen Gas.

Vorteilhaft ist dabei das Arbeiten an der obersten Löslichkeitsgrenze des Amins, um einen möglichst hohen Stoffumsatz zu gewährleisten. Insbesondere wird in Schritt a) das Hydrogencarbonat als gesätigte Lösung oder sogar als Suspension, beispielsweise in Wasser, gewonnen, wobei hier das Hydrogencarbonat entsprechend auch als Feststoff teilweise ausgefällt werden kann. Es kann sogar gegebenenfalls getrocknet werden, um so beispielsweise als Feststoff transportiert zu werden, beispielsweise zu einem geeigneten (in der erfindungsgemäßen Vorrichtung zweiten) zweiten Reaktor zur Durchführung von Schritt b), wobei jedoch auch ein direkter Transport einer Lösung oder Suspension des Hydrogencarbonats zu einem Reaktor für Schritt b) möglich ist. Bevorzugt ist ein direkter Transport vom ersten zum zweiten Reaktor über mindestens eine zweite Leitung.

Gemäß bestimmten Ausführungsformen wird das $CO_2$, so es nicht im Wesentlichen (> 90 Gew.%, bevorzugt > 95 Gew.%, weiter bevorzugt > 99 Gew.%, bezogen auf ein Gemisch, z.B. Gasgemisch, umfassend $CO_2$, welches in Schritt a) eingebracht wird) rein oder rein ist, aus einem Gemisch, beispielsweise Gasgemisch wie Luft, umfassend $CO_2$ konzentriert, beispielsweise aus Rauchgas. Anders gesagt kann $CO_2$, so es nicht (mit > 90 Gew.%, bevorzugt > 95 Gew.%, weiter bevorzugt > 99 Gew.% $CO_2$, bezogen auf das Gemisch vorliegt, angereichert werden, wobei die Art der Anreicherung nicht beschränkt ist und auch von kleinen Mengen >0 Gew.%, bezogen auf das Gemisch, beginnen kann, wie beim Carbon Capture aus Luft.

Ebenfalls ist der Schritt b) des Reagierens des Hydrogencarbonats der Formel $HNR_1R_2H^+ HCO_3^-$ mit Wasser- stoff zu einem Formiat der Formel $HNR_1R_2H^+ HCO_2^-$ nicht besonders beschränkt. Das in Schritt a) entstandene Hydrogencarbonat wird in Schritt b) mit Hilfe von $H_2$ (z.B. aus der Wasserelektrolyse) zum entsprechenden Formiat, z.B. Ammoniumformiat, hydriert.

Geeignete Verfahren zum Hydrieren sind hierbei bekannt, beispielsweise aus Su et al.; (2015), "Highly Efficient Hydrogen Storage System Based on Ammonium Bicarbonate/Formate Redox Equilibrium over Palladium Nanocatalysts"; ChemSusChem 2015, 8, 813-816, auf das bezüglich der Hydrierung Bezug genommen wird, wobei eine Hydrierung generell jedoch auch mit geeigneten anderen Katalysatoren, z.B. basierend auf Übergangsmetallen, z.B. Pd, Pt, Os, Ir, Rh, Ru, Ni, Co, Fe, etc., insbesondere Platinmetallen (Pd, Pt, Os, Ir, Rh, Ru), bevorzugt Pd, Pt, erfolgen kann. Die Hydrierung kann beispielsweise durch Einbringen von Wasserstoff, ggf. mit Katalysator, in eine Lösung oder Suspension des Hydrogencarbonats in einem geeigneten Lösungsmittel, insbesondere Wasser, und entsprechende Reaktion von Wasserstoff und Hydrogencarbonat bei geeigneten Bedingungen erfolgen. Hierzu eignet sich beispielsweise eine Art Wirbelreaktor oder ein Rohrreaktor mit fester Katalysatorphase, ist jedoch nicht darauf beschränkt. Gemäß bestimmten Ausführungsformen wird der Schritt b) in einem Wirbelreaktor oder einem Rohrreaktor mit fester Katalysatorphase durchgeführt, und entsprechend kann der zweite Reaktor in einer erfindungsgemäßen Vorrichtung ein Wirbelreaktor oder ein Rohrreaktor mit fester Katalysatorphase sein.

Beispielsweise kann gelöstes Hydrogencarbonat mit Wasserstoff zu Formiat unter Druck in einem Autoklaven hydriert werden. Die Hydrierung von Hydrogencarbonaten zu Formiaten wird üblicherweise mit großen Ausbeuten umgesetzt, siehe z.B. für Kalium oder Natrium die Literatur Wiener et al.; (1988), "The Heterogeneous Catalytic Hydrogenation of Bicarbonate to Formate in Aqueous Solutions"; Journal of Catalysis 110, 184-190, oder für Ammoniumhydrogencarbonat den Artikel Su et al.; (2015), "Highly Efficient Hydrogen Storage System Based on Ammonium Bicarbonate/Formate Redox Equilibrium over Palladium Nanocatalysts"; ChemSusChem 2015, 8, 813-816, mit Ausbeuten von z.B. über 95% bei z.B. einem Druck von 27.5 bar und in einer Zeit t = 15h.

Apparatetechnisch kann der Prozessschritt b) bzw. Schritt b) gemäß bestimmten, bevorzugten Ausführungsformen in einem Slurry-Reaktor durchgeführt werden, insbesondere mit einem geeigneten Katalysator, z.B. einem hochdispersen Palladiumkatalysator. Entsprechend ist in einer erfindungsgemäßen Vorrichtung ein bevorzugter zweiter Reaktor ein Slurry-Reaktor.

Ein beispielhafter Slurry-Reaktor 12a ist in Figur 20 schematisch dargestellt. Hierbei wird über zweite die Wasserstoff-Zuführleitung 102 das Hydrogencarbonat aus dem ersten Reaktor und über Leitung H2a Wasserstoff zugeführt, und das hergestellte Produkt, Formiat der Formel $HNR_1R_2H^+ HCO_2^-$, über die dritte Leitung 103 ab- und Richtung dritter Reaktor geführt. Zudem weist der Slurry-Reaktor 12a noch einen Auslass 12b für Gas (Purge) sowie eine Zuleitung 11c und Ableitung 11d für einen Wärmeträger zum Nutzen der erzeugten Energie auf.

Die Prozessbedingungen der Hydrierung in einem zweiten Reaktor bzw. in Schritt b), beispielsweise in einem Slurry-Reaktor, sind nicht besonders beschränkt, und können beispielsweise bei einer Temperatur von 20 bis 80°C, beispielsweise 40 bis 70°C, z.B. bei etwa 60°C, und/oder einem geeigneten Überdruck, beispielsweise 5 bis 35 bar, beispielsweise 15 bis 30 bar, z.B. etwa 27,5 bar, angesiedelt sein. Zusätzlich zu einer möglichen elektrochemischen Verdichtung bei einer Wasserelektrolyse sollte daher der Wasserstoff bevorzugt deshalb (zusätzlich) komprimiert und anschließend auf die Reaktionstemperatur des 2. Schrittes gebracht werden. Der hierfür nötige Energieaufwand für die isentrope Kompression bei einem Wirkungsgrad von 72 % und eine benötigten Kühlung ist im Idealfall jedoch geringer und kann beispielsweise bei 0,1 MW liegen, wie in einem später folgenden Beispiel gezeigt.

Die Förderung des mehrphasigen Reaktandengemisches auf Reaktionsdruck kann beispielhaft eine Exzenterschneckenpumpe, bevorzugt mit anschließender Kühlung, übernehmen. Auf Grund des inkompressiblen Charakters des breiförmigen Reaktionsgemisches ist die Kompression energetisch mit einem geringen Aufwand behaftet.

Das im Prozessschritt b) anfallende Wasser kann durch Rückintegration als internes Wärmeträgermedium zur Beheizung des gesamten Prozesses genutzt werden und wird bevorzugt erst im späteren Verlauf des Prozesses abgetrennt, insbesondere nach Schritt d), um eine Akkumulation von Nebenprodukten zu vermeiden. Durch eine Aufreinigung eines solchen später abgetrennten Stromes ist eine nahezu vollstände Rückgewinnung des im Prozess verwendet Amins der Formel $HNR_1R_2$, z.B. Ammoniak, möglich. Des Weiteren ist das aufgereinigte Wasser sowohl als Prozesswasser, also als Lösungsmittel, als auch mit Entfernung von ionischen Komponenten einem Wasserelektrolyseur wieder als Edukt zuführbar.

Für den 3-phasigen Reaktionsschritt b) sind daneben als zweiter Reaktor auch die Reaktorentypen Rieselbett, Blasensäule mit Packung und Wirbelschichtreaktoren als zweiter Reaktor denkbar. Die Reaktionsenthalpie der exothermen Hydrierung beträgt -21,359 kJ/mol für Ammoniak. Die damit im größeren Maßstab notwendige Wärmeabfuhr aus dem Reaktor kann für die Vorheizung des nächsten Schrittes c) genutzt werden.

Ebenso ist die Quelle für den Wasserstoff für Schritt b) nicht besonders beschränkt. Gemäß bestimmten Ausführungsformen wird der in Schritt b) verwendete Wasserstoff durch eine Wasserelektrolyse erzeugt, welche bevorzugt durch erneuerbare Energien betrieben wird. Hierdurch kann Wasserstoff sehr rein und effizient erhalten werden, und es entsteht als Beiprodukt nur Sauerstoff. Zudem kann in Schritten b) und/oder c) Wasser freigesetzt werden, welches beispielsweise für eine Wasserelektrolyse verwendet werden kann und/oder als Lösungsmittel im Verfahren dienen kann. Zudem ergibt sich für den Gesamtprozess unter Verwendung einer Wasserelektrolyse eine herausragende Energiebilanz, da Abwärme aus der Wasserelektrolyse effizient im weiteren Prozess, beispielsweise Schritt c), verwendet werden kann, beispielsweise auch bei einem integrierten Verfahren. Die Wasserelektrolyse ist nicht besonders beschränkt und kann beispielsweise bei einem Druck von 1 bis 10 bar, bevorzugt 3 bis 5 bar, erfolgen, wobei bei einem solchen Druck eine gute Ausbeute und eine geeignete Effizienz hinsichtlich des eingebrachten Stroms derart erzielt werden kann, dass die Abwärme z.B. geeignet zur Durchführung von Schritt c) verwendet werden kann.

Obgleich es möglich ist, Wasserstoff von einem Wasserelektrolyseur zu einem Reaktor für Schritt b) auch über weite Strecken zu transportieren, ist es bevorzugt, Schritt b) in der Nähe, z.B. mit einer Entfernung von weniger als 50 km, weiter bevorzugt weniger als 20 km, noch weiter bevorzugt weniger als 10 km, eines Wasserelektrolyseurs derart durchzuführen, dass $H_2$ aus dem Wasserelektrolyseur mit einer geeigneten Leitung, z.B. einem Rohr, direkt zu einem Reaktor (z.B. zweiten Reaktor in der erfindungsgemäßen Vorrichtung) zur Durchführung von Schritt b) geleitet wird.

Gemäß bestimmten Ausführungsformen erfolgt der Schritt b) des Hydrierens mit einer Lösung, insbesondere gesättigten Lösung, des Hydrogencarbonats, beispielsweise einer wässrigen Lösung.

Zudem ist der Schritt c) der Zersetzung des Formiats der Formel $HNR_1R_2H^+ HCO_2^-$ zu einem Amid der Formel $HCONR_1R_2$ und $H_2O$ nicht besonders beschränkt.

Der Reaktionsschritt ist stark endotherm, beispielsweise mit einer Reaktionsenthalpie von 94,6 kJ/mol für Ammoniumformiat, weshalb davon auszugehen ist, dass neben der Vorheizung auf eine geeignete Betriebstemperatur, z.B. von etwa 140 °C für Ammoniumformiat, der hier verwendete dritte Reaktor selbst eine große Wärmesenke darstellt. Diese Senke kann beispielsweise durch Rückintegration des Produktstromes, z.B. eine geeignete Vorwärmung mittels eines Wärmetauschers, und/oder der Integration der Abwärme von weiteren exothermen Prozessen, z.B. aus einer Wasserhydrolyse und/oder insbesondere aus einer Weiterverarbeitung des final entstehenden CO, z.B. in einem Fischer-Tropsch-Prozess, ausgeglichen werden.

Das entstehende Formiat, beispielsweise Ammoniumformiat, wird beispielsweise unter Wärmezufuhr zum korrespondierenden Amid, beispielsweise Formamid, und Wasser zersetzt. Die Zersetzung beginnt beispielsweise oberhalb 150 °C. Als Beispiel kann Ammoniumformiat herangezogen werden, das ab ca. 170 °C zu Formamid und Wasser zerfällt, wie in Patent US 1582675: Herstellung von Formamid aus Ammoniumformiat beschrieben ist, und auf das bezüglich der Herstellung von Amiden aus Formiaten Bezug genommen wird.

Beispielsweise ist der Haupteinsatz von Ammoniumformiat in der Industrie die Bereitstellung von Formamid durch die Zersetzung des Formiats. Dabei wird Ammoniumformiat auf über 170°C erhitzt, und es zerfällt zu Formamid und Wasser. Eine beispielhafte mögliche Umsetzung aus Ammoniumformiat kann in Patent US1582675: Herstellung von Formamid eingesehen werden, wobei bevorzugt reines Formamid extrahiert wird.

Gemäß bestimmten Ausführungsformen wird Abwärme aus einer Wasserelektrolyse für die Herstellung von Wasserstoff für Schritt b) zur Durchführung von Schritt c) verwendet. Entsprechend ist es bevorzugt, die Schritte b) und c) in räumlicher Nähe, z.B. mit einer Entfernung von weniger als 50 km, weiter bevorzugt weniger als 20 km, noch weiter bevorzugt weniger als 10 km, zueinander durchzuführen.

Der Reaktionsschritt c) läuft bevorzugt in der flüssigen Phase ab, beispielsweise in Wasser als Lösungsmittel, jedoch können die im Schritt a) gelösten Gase in einem Lösungsmittel wie Wasser beim Aufheizen des Reaktionsgemisches ausgetrieben werden. So Wasser als Lösungsmittel verwendet wird, befindet sich zudem bei einem beispielhaften Reaktionsdruck von 1 bar ein großer Teil des am Prozess beteiligten Wassers in der Gasphase. Aus diesem Grund ist eine bevorzugte Reaktorkonfiguration bzw. ein bevorzugter dritter Reaktor ein mit Katalysator gepackter Rohrreaktor - wobei der Katalysator nicht besonders beschränkt ist - oder ein Rohrbündelreaktor.

Zur Erhöhung des Umsatzes kann gemäß bestimmten Ausführungsformen das Amin der Formel $HNR_1R_2$, insbesondere Ammoniak, der Gasphase zusätzlich hinzugegeben werden.

Gemäß bestimmten Ausführungsformen kann das im vorherigen Reaktionsschritt b) entstandene Wasser und/oder das Absorbens bzw. Lösungsmittel aus Schritt a) vor einem Vorheizen des Reaktionsgemisches vor Schritt c), beispielsweise durch Destillation, z.B. unter Nutzung der Abwärme eines Fischer-Tropsch-Prozesses, abgetrennt werden. Dies ermöglicht kleinere Massenströme in Schritten c) und d) und der anschließenden Aufreinigungssequenz mit Schritt e) und ggf. weiteren Schritten, erschwert ggf. jedoch die Förderung des möglicherweise zumindest teilweise als Feststoff vorliegenden Reaktionsgemisches.

Auch der Schritt d) der Zersetzung des Amids der Formel $HCONR_1R_2$ zu CO und einem Amin der Formel $HNR_1R_2$ ist nicht besonders beschränkt. Das Amid, beispielsweise Formamid, kann durch (auch weitere) Energiezufuhr zu CO und dem AusgangsAmin zersetzt werden, welches dann letzten Endes beispielsweise nach Schritt e) wieder in Schritt a) eingesetzt werden kann. Wie ersichtlich können die Schritte c) und d) an getrennten Standorten stattfinden, also beispielsweise in getrennten Reaktoren (z.B. in einem dritten und einem vierten Reaktor einer erfindungsgemäßen Vorrichtung, ggf. mit zwischenzeitlicher Isolierung des Amids bzw. zumindest einer Herstellung des Amids und Transport oder Leitung zwischen dem dritten und vierten Reaktor), oder in einem gemeinsamen Reaktor (z.B. dem kombinierten dritten Reaktor in einer erfindungsgemäßen Vorrichtung ohne Isolierung des Amids, wobei sich natürlich im kombinierten dritten Reaktor das Amid als Intermediat bilden kann).

Auf Grund der geringen Reaktionsenthalpie in Schritt d) von beispielsweise 19,35 kJ/mol bei Formamid ist davon auszugehen, dass ein geringer Wärmeeintrag notwendig ist. Dieser wird von der Vorwärmung, beispielsweise auf die genannten 180°C im Falle von Formamid, dominiert. Auch in diesem Fall kann auf Grund des Temperaturniveaus eine Integration der Abwärme von Folgeprozessen, beispielsweise eines Fischer-Tropsch-Prozesses, wie oben beschrieben, oder anderen exothermen Prozessen erfolgen.

Die Zersetzung zu CO und Amin kann in Schritt d) nicht nur von der Temperatur in Schritt d) abhängen, sondern beispielsweise auch von der Anwesenheit oder Abwesenheit eines Katalysators, welcher nicht besonders beschränkt ist. Bevorzugt findet Schritt d) bei Drücken von weniger als 7 bar, bevorzugt 4 bar oder weniger, beispielsweise 2 bar oder weniger statt.

In Schritt d) wird das Amid der Formel $HCONR_1R_2$ zu CO und einem Amin der Formel $HNR_1R_2$ zersetzt. Durch geeignete Temperatureinstellung und/oder -führung kann hierbei auch die Zersetzung zu anderen Produkten wie HCN oder polymeren Produkten vermieden werden. Die Temperatur kann je nach ursprünglichem Amin und entsprechend gebildetem Formiat bzw. Amid geeignet eingestellt werden.

Für diesen, bevorzugt nicht katalysierten, Prozess in Schritt d) kann beispielsweise ein Verdampfungskessel als vierter Reaktor genutzt werden. Dies ermöglicht ein Ausströmen der Produktgase, beispielsweise $NH_3$ und CO bei Formamid, sowie ggf. des Lösungsmittels, z.B. des Wasserdampfes, wobei dieser auch aus Schritt c) mitgeschleppt sein kann. Durch mindestens einen Wärmetauscher kann das in Schritt d) entstehende Gemisch, beispielsweise ein Heißdampf-Produktgas-Gemisch, gemäß bestimmten Ausführungsformen geeignet abgekühlt werden, beispielsweise auf 60 - 100°C, bevorzugt 70 bis 90°C, z.B. auf etwa 84°C. Durch die Kondensation von schwersiedenden Bestandteilen kann hierbei ein Unterdruck entstehen, welcher die Förderung des Dampfgemisches vom vierten Reaktor zum Wärmetauscher übernehmen kann.

Durch die Abkühlung und der damit verbundenen Phasenseparation kann gemäß bestimmten Ausführungsformen vor Schritt e) eine Lösungsmittelphase, bevorzugt die größtenteils aus Wasser bestehenden Phase, abgetrennt werden. Dies kann in einer geeigneten Separationsvorrichtung erfolgen, die bevorzugt in Strömungsrichtung zwischen dem vierten Reaktor und dem fünften Reaktor angeordnet und dazu ausgebildet ist, ein Lösungsmittel von dem CO und dem Amin der Formel $HNR_1R_2$ zumindest teilweise abzutrennen. Danach kann dann ebenfalls vor Schritt e) noch ggf. eine weitere Kühlung erfolgen. Um beispielsweise den Wasseranteil im Aufreinigungsschritt e) und ggf. weiteren Schritten zu steuern, erfolgt jedoch nur eine geringe Kühlung, beispielsweise in einem Bereich von 5 bis 30°C, z.B. 10 bis 20°C. z.B. 15 bis 17°C. Beispielsweise kann der Produktstrom bei der Formamid-Zersetzung lediglich von 84 °C auf 68 °C abgekühlt werden.

Wie aus dem obigen ersichtlich ist, ist es gemäß bestimmten Ausführungsformen bevorzugt, dass die Schritte a) bis d) in einem Lösungsmittel erfolgen, insbesondere Wasser. Weiterhin ist es gemäß bestimmten Ausführungsformen bevorzugt, dass das Lösungsmittel zumindest teilweise vor Schritt e) abgetrennt wird, bevorzugt zwischen Schritt d) und Schritt e). Hierdurch können Schritt e) sowie ggf. weitere Schritte effizienter und mit geringerem Energieaufwand durchgeführt werden. Alternativ oder zusätzlich ist es gemäß bestimmten Ausführungsformen möglich, Wasser aus der Reaktion in Schritt b) und/oder c) zumindest teilweise abzutrennen, bevorzugt vor Schritt e), insbesondere zwischen Schritt d) und e).

Gemäß bestimmten Ausführungsformen kann vor Schritt e) abgetrenntes Lösungsmittel und/oder Wasser aus der Reaktion in Schritt b) und/oder c) zumindest teilweise wieder Schritt a) und/oder im Falle von Wasser ggf. einer Wasserelektrolyse zugeführt werden. Beispielsweise kann also auch das freigesetzte Wasser aus der Hydrierung bzw. der Zersetzung zu dem Amid, z.B. Formamid, dem Zyklus bei Schritt a) und/oder bei der Wasserelektrolyse wieder zugeführt werden. Dies kann jedoch vom Standort und der Möglichkeit der Integration in die Gesamtanlage abhängen. Durch die Rückführung kann der Bedarf an Lösungsmittel und/oder Wasser verringert und eine nachträgliche Reinigung zusätzlich vereinfacht werden.

So eine Abtrennung durchgeführt wird, können ein Gasproduktstrom, der das Produktgas CO beinhaltet, und ein Flüssigstrom entstehen, welche unabhängig voneinander alleine oder beide jeweils gekühlt werden können in entsprechend einer Produktgas-Kühlvorrichtung bzw. einer Flüssigstrom-Kühlvorrichtung, welche beide nicht besonders beschränkt sind. Der Produktgasstrom oder das Produkt aus Schritt d) werden dann dem Schritt e) zugeführt, welcher im Prinzip wieder eine Art "Wäsche" darstellen kann, wobei dort das Amin der Formel $HNR_1R_2$ durch Reaktion umgesetzt werden kann und danach das Fällungsprodukt geeignet abgetrennt werden kann.

Der Schritt e) des zumindest teilweise Reagierens des Amins der Formel $HNR_1R_2$ in der Mischung umfassend das Amin der Formel $HNR_1R_2$ und CO mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und des Abtrennens des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht, ist nicht besonders beschränkt. Im Idealfall wird das Amin der Formel $HNR_1R_2$ in Schritt e) quantitativ umgesetzt und das CO kann als Reinprodukt erhalten werden. Jedoch kann das CO nach Schritt e) auch weiterhin unreagiertes Amin der Formel

HNR$_1$R$_2$ enthalten, welches dann noch in Folgeschritten abgetrennt werden kann, wie nachfolgend beschrieben. Durch die Durchführung des Schritts e) kann jedoch die nachfolgende Reinigung effizient gestaltet oder sogar vermieden werden. Im Schritt e) ist das Fällungsreagenz für das Amin der Formel HNR$_1$R$_2$ nicht besonders beschränkt, ist bevorzugt jedoch CO$_2$, welches für Schritt e) in einen fünften Reaktor geeignet zugeführt werden kann. Durch Verwendung von CO$_2$ entsteht das Hydrogencarbonat der Formel HNR$_1$R$_2$H$^+$ HCO$_3^-$, welches gemäß bevorzugten Ausführungsformen, nach der Abtrennung in Schritt e) wieder Schritt b) zugeführt wird, wo es entsprechend wiederum zu Formiat reagiert werden kann mit dem Hydrogencarbonat aus Schritt a).

Insbesondere ist bevorzugt, dass als Amin Ammoniak verwendet wird, wobei Schritt e) dann bei Verwendung von CO$_2$ als Fällungsreagenz eine Art umgekehrte Ammoniakwäsche darstellt, wobei das Ammoniak ausgewaschen wird.

Durch Schritt e) wird das dabei entstehende Produkt, z.B. ein Produktgas, mit CO angereichert, und das Amin ausgefällt. Dies ermöglicht einen geringeren Energieaufwand für eine ggf. durchgeführte nachgeschaltet hochselektive CO-Aufreinigung, z.B. in mindestens einer Coldbox (Kältekammer), bevor das CO weiter verwendet wird, z.B. in einer Fischer-Tropsch-Synthese.

Gemäß bestimmten Ausführungsformen wird Schritt e) auf einem Temperaturniveau von 30 - 60 °C und/oder einem Druckniveau von 0,5 bis 2 bar, bevorzugt in etwa 1 bar, durchgeführt, da geringe Temperaturen zu einer höheren Ausbeute an Fällungsprodukt, z.B. Ammoniumhydrogencarbonat bei Verwendung von Ammoniak und CO$_2$, und einem effizienteren Abscheideprozess führen.

So Schritt e) mit CO$_2$ als Fällungsreagenz durchgeführt wird, ist das Verhältnis von zugeführtem CO$_2$ in Schritt a) zu zugeführtem CO$_2$ in Schritt e) nicht besonders beschränkt. Es kann beispielsweise in einem molaren Verhältnis von 90:10 bis 10:90, bevorzugt 80:20 bis 20:80, weiter bevorzugt 70:30 bis 30:70, noch weiter bevorzugt 55:45 bis 35:65, insbesondere 55:45 bis 40:60 liegen. Für Ammoniak als Amin ergibt sich beispielsweise ein gutes Verhältnis in den genannten Bereichen, insbesondere von etwa 44-45 zu etwa 55-56, was hierbei einer Gleichgewichtsverschiebung durch die Aufheizung nach Schritt b) und/oder einer Anwesenheit von Lösungsmittel, z.B. Wasser, geschuldet sein kann.

Hierbei kann auch mit Schritten a) bis e), wie oben dargelegt, eine effiziente Rückintegration von Wärme aus Nachfolgeprozessen mit CO, beispielsweise einer Fischer-Tropsch-Synthese, erfolgen.

Nach Schritt e) ergibt sich nach der Abtrennung des Fällungsproduktes ein Produkt umfassend CO, insbesondere ein aufgereinigter Produktgasstrom, welcher einen geringeren bis großen Anteil an Amin der Formel HNR$_1$R$_2$, z.B. NH$_3$, von beispielsweise 0 bis 60 Gew.% (auch abhängig vom verwendeten Amin) enthalten kann. Das im Produkt umfassend CO enthaltene unreagierte Amin der Formel HNR$_1$R$_2$, z.B. NH$_3$, wird gemäß bestimmten Ausführungsformen in einem Schritt f) abgetrennt, d.h. das Verfahren umfasst gemäß bestimmten Ausführungsformen weiter einen Schritt f) des Abtrennens des CO aus dem Produkt umfassend CO und unreagiertes Amin der Formel HNR$_1$R$_2$. Danach kann das hochreine CO Folgeprozessen zugeführt werden, bevorzugt einer Fischer-Tropsch-Synthese für eine geeignete Rückintegration von Wärme ins Gesamtverfahren. Schritt f) ist nicht besonders beschränkt und kann beispielsweise durch ein geeignetes kryotechnisches Verfahren, erfolgen, beispielsweise mit mindestens einer Coldbox, z.B. zwei oder mehr Kühlkammern bzw. Coldboxen. Das abgetrennte Amin kann gemäß bestimmten Ausführungsformen durch eine geeignete Vorheizeinrichtung, z.B. auch einen im Gesamtverfahren gekoppelten Wärmetauscher, wieder auf eine geeignete Temperatur erhitzt werden, z.B. auf 20 bis 40°C, z.B. auf etwa 30°C, und dann wieder Schritt a) zugeführt werden, um dort wiederverwendet du werden. Hierdurch kann sich der Kreislauf des Amins, z.B. Ammoniakkreislauf, des Prozesses schließen. So die Vorwärmung entfällt, kann das rückgeführte Amin feste Bestandteile umfassen, was eine Rückführung erschweren kann.

Gemäß bestimmten Ausführungsformen wird zudem das vor Schritt d) abgetrennte Lösungsmittel und/oder Wasser aufgereinigt, wobei dort auch Nebenprodukte der Reaktion mit Amin enthalten sein können. Diese können wiederum derart reagiert werden, dass auch aus diesem Lösungsmittel und/oder Wasser wieder das Amin gewonnen werden kann, welches dann ebenfalls zu Schritt a) rückgeführt werden kann, sodass eine nahezu vollständige Regeneration des Amins, z.B. des Ammoniaks, möglich wird.

Wie oben dargelegt kann sich an Schritt f) gemäß bestimmten Ausführungsformen eine Weiterreaktion des CO anschließen, insbesondere eine Fischer-Tropsch-Synthese. Gemäß bestimmten Ausführungsformen wird in Schritt c) und/oder d) Energie durch eine Weiterreaktion von CO bereitgestellt wird, bevorzugt durch Weiterreaktion von CO in einer Fischer-Tropsch-Synthese.

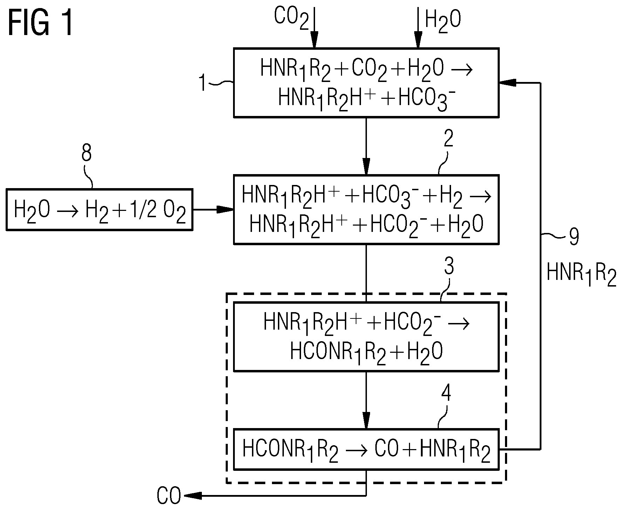

Ein erfindungsgemäßes Verfahren beinhaltet im Minimum vier Reaktionsschritte bis zur Herstellung von CO - wobei Schritt e) einen Reinigungsschritt darstellt, welche beispielhaft und schematisch für eine CO-Bildung über Amide mit weiteren optionalen Schritten in Fig. 1 zusammengefasst sind.

In Fig. 1 sind hierbei bereits alle relevanten Reaktionen für eine CO-Herstellung gezeigt.

Schritt a) wird hierbei in Reaktion 1 durchgeführt, und es ergibt sich die folgende Reaktionsgleichung:

$$HNR_1R_2 + CO_2 + H_2O \rightarrow [HNR_1R_2H]^+ [HCO_3]^-$$

Ebenfalls gezeigt ist ein bevorzugter Zwischenschritt 8 der Wasserelektrolyse zur Bereitstellung von Wasserstoff:

$$H_2O \rightarrow H_2 + \tfrac{1}{2} O_2$$

Schritt b) wird in Reaktion 2 durchgeführt, mit folgender Reaktionsgleichung:

$$[HNR_1R_2H]^+ [HCO_3]^- + H_2 \rightarrow [HNR_1R_2H]^+ [HCO_2]^- + H_2O$$

Schritt c) wird in Reaktion 3 durchgeführt, mit folgender Reaktionsgleichung:

$$[HNR_1R_2H]^+ [HCO_2]^- \rightarrow HCONR_1R_2 + H_2O$$

Schritt d) wird in Reaktion 4 durchgeführt, mit folgender Reaktionsgleichung:

$$HCONR_1R_2 \rightarrow CO + HNR_1R_2$$

Die Summe aller Reaktionen ist dann:

$$CO_2 \rightarrow CO + \tfrac{1}{2} O_2 \, , \Delta H_R = 282{,}96 \text{ kJ/mol}$$

Zusätzlich gezeigt in Figur 1 ist ein bevorzugter Schritt 9, bei dem das Amin der Formel $HNR_1R_2$ aus Reaktion 4 für eine erneute Reaktion 1 zurückgeführt wird, wobei hierbei eine bevorzugte Rückführung bei der Herstellung von CO in Schritt d) erfolgt, da das Amin theoretisch quantitativ zurückerhalten werden kann. Diese Rückführung erfolgt im vorliegenden Verfahren bevorzugt nach der Abtrennung in Schritt e), wie oben dargelegt, was aus Gründen der leichteren Verständlichkeit in Figur 1 nicht dargestellt ist.

Im erfindungsgemäßen Verfahren können alle Schritte an verschiedenen Standorten betrieben werden, oder es können einzelne oder bevorzugt auch alle Schritte an einem Standort zusammengefasst sein. Insbesondere die Schritte c) und d) können auch sequenziell im gleichen Reaktor (kombinierter dritter Reaktor in der erfindungsgemäßen Vorrichtung) durchgeführt werden.

Gemäß bestimmten Ausführungsformen umfasst das erfindungsgemäße Verfahren weiter eine Wiederverwendung des in Schritt d) erzeugten Amins der Formel $HNR_1R_2$ in einem erneuten Schritt a) und/oder als Hydrogencarbonat nach Schritt e) in Schritt b). In einem nachfolgenden Schritt kann insbesondere das anfallende Amin, beispielsweise Ammoniak, wieder in Wasser gelöst und somit vom CO getrennt werden. Dies kann zu einem hohen Anteil von >70 Gew.%, bevorzugt > 80 Gew.%, insbesondere > 90 Gew.% oder sogar zu purem CO im Produkt nach diesem Schritt führen, bezogen auf das Produkt, und ein geschlossener Aminkreislauf, beispielsweise Ammoniakkreislauf, kann etabliert werden. Nebenprodukte der Zersetzung des Amids können ggf. enthalten sein, es ist jedoch bevorzugt, dass in Schritt d) das Amid möglichst quantitativ oder sogar quantitativ zu CO und Amin zersetzt wird.

Wie oben dargelegt kann das CO nach Schritt e) abgetrennt werden, also beispielsweise aus einer Mischung umfassend CO und das Amin der Formel $HNR_1R_2$, sowie ggf. weitere Produkte wie polymere Produkte, etc. Bevorzugt ist jedoch die Herstellung von im Wesentlichen, also > 90 Gew.%, bevorzugt > 95 Gew.%, weiter bevorzugt > 99 Gew.%, oder sogar 100 Gew.%, bezogen auf das Zersetzungsprodukt, CO.

Gemäß bestimmten Ausführungsformen wird in Schritt d) das Amid im Wesentlichen, also zu > 90 Gew.%, bevorzugt > 95 Gew.%, weiter bevorzugt > 99 Gew.%, oder sogar vollständig, bezogen auf die Produkte der Zersetzung, zu CO und das Amin der Formel $HNR_1R_2$ zersetzt.

Vorliegend wird für eine Abtrennung von Aminen, insbesondere Ammoniak, eine Nasswäsche verwendet. Im vorliegenden Verfahren kann eine solche Nasswäsche hier derart vorgesehen sein, dass hierzu eine Mischung umfassend Wasser und $CO_2$, beispielsweise angefeuchtetes Gas umfassend $CO_2$, bevorzugt mit hoher Reinheit bezüglich $CO_2$ im Gas von beispielsweise >70 Gew.%, bevorzugt > 80 Gew.%, insbesondere > 90 Gew.%, bezogen auf das Gas, z.B. aus Rauchgas, verwendet wird. Diese kann gemäß bestimmten Ausführungsformen im Wesentlichen stöchiometrisch korrekt oder mit leichtem Überschuss > 1:1, z.B. > 1.05:1, z.B. > 1.1:1, in Schritt e) eingebracht, zum Beispiel eingeblasen, werden, wobei Schritt e) jedoch nach Schritt d) erfolgt. Entsprechend kann hier wieder das Hydrogencarbonat der Formel $HNR_1R_2H^+ HCO_3^-$ gebildet werden. Hierdurch kann das Produktgas direkt aufgereinigt werden und Hydrogencarbonat direkt als Feststoff ausgefällt und abgetrennt werden.

Gemäß bestimmten Ausführungsformen erfolgen die Schritte c) und d) in einem gemeinsamen Reaktor. Dies bietet sich insbesondere an, wenn ein erzeugtes Produkt aus Schritt d), insbesondere CO, in der Nähe, z.B. mit einer Entfernung von weniger als 50 km, weiter bevorzugt weniger als 20 km, noch weiter bevorzugt weniger als 10 km, des gemeinsamen Reaktors gleich weiter verwendet werden kann und/oder wenn das Formiat ebenfalls in der Nähe hergestellt werden kann, insbesondere wenn eine Wasserelektrolyse räumlich in der Nähe ist, oder einfach transportiert werden kann. Hierdurch kann ein effizientes Verfahren erhalten werden.

Gemäß bestimmten Ausführungsformen erfolgen die Schritte c) und d) an einem ersten und an einem zweiten Standort. Gemäß bestimmten Ausführungsformen wird das in Schritt c) erzeugte Amid der Formel $HCONR_1R_2$ vom ersten zum zweiten Standort transportiert. Dies ist insbesondere bei längeren Transportwegen von Vorteil, da insbesondere CO bevorzugt durch Zersetzung an einem Ort hergestellt werden sollte, an dem dieses weiter verwendet werden kann, beispielsweise im Rahmen einer chemischen Synthese, z.B. einer Fischer-Tropsch-Synthese, oder Kettenverlängerungsreaktionen in Crackern, etc. Hier ist für längere Transportwege, beispielsweise mehr als 30 km, mehr als 50 km oder sogar mehr als 100 km, ein Transport des Amids einfacher zu gestalten. Hierbei ist weiterhin von Vorteil, dass das Amid nach Schritt c) wie auch das Amin nach Schritt d) ggf. einfach gespeichert werden können, wozu in einer erfindungsgemäßen Vorrichtung auch entsprechend Speichervorrichtungen vorgesehen sein können.

Es ist aber auch erfindungsgemäß umfasst, dass anstelle von Amid oder zusätzlich das Formiat der Formel $HNR_1R_2H^+ HCO_2^-$ zwischen verschiedenen Standorten transportiert wird, also beispielsweise ein Transport von Formiat nach Schritt b) von einem ersten Standort zu einem zweiten Standort erfolgt, an dem dann Schritt c) und Schritt d) durchgeführt wird, oder zu einem zweiten Standort erfolgt, wo Schritt c) durchgeführt wird, und dann das Amid zu einem dritten Standort transportiert wird, wo das Amid in einem Schritt d) zersetzt wird. Dies ist jedoch erfindungsgemäß nicht bevorzugt. Und es ist auch nicht ausgeschlossen, dass das Hydrogencarbonat der Formel $HNR_1R_2H^+ HCO_3^-$ alternativ oder zusätzlich transportiert wird, wobei auch dies nicht bevorzugt ist. Entsprechend sind also sogar drei Transporte von jeweils Hydrogencarbonat, Formiat und Amid möglich, um die Schritte a), b), c) und d) an verschiedenen Standorten durchzuführen, und es kann sich dann auch ein weiterer Transport von Amin der Formel $HNR_1R_2$ anschließen, welches dann wieder zu einem Standort gebracht werden kann, an dem Schritt a) durchgeführt wird, wobei dieser der gleiche sein kann wie beim ersten Schritt a) oder davon verschieden. Bevorzugt ist jedoch, dass zumindest Schritte a) bis c) integriert erfolgen, und insbesondere bevorzugt ist eine integrierte Durchführung von Schritten a) bis e).

Gemäß bestimmten Ausführungsformen wird in Schritt b) und/oder c) freigesetztes Wasser der Wasserelektrolyse, so vorhanden, zugeführt. Hierdurch können die Kosten weiter gesenkt und eine Beeinträchtigung der Natur weiter verringert werden, insbesondere da im vorliegenden Verfahren theoretisch Wasser auch nicht verbraucht wird. Entsprechend werden hier bevorzugt Schritte b) und/oder c) in räumlicher Nähe, z.B. mit einer Entfernung von weniger als 50 km, weiter bevorzugt weniger als 20 km, noch weiter bevorzugt weniger als 10 km, zu einer Wasserelektrolyseeinrichtung durchgeführt.

Gemäß bestimmten Ausführungsformen wird in Schritt b) und/oder c) freigesetztes Wasser Schritt a) zugeführt. Auch hier gilt der Vorteil, dass es zu einer Kostenersparnis und einer geringeren Beeinträchtigung der Natur kommt. Auch eine Kombination der Zufuhr des in Schritten b) und/oder c) freigesetzten Wassers zu Schritt a) und einer ggf. vorhandenen Wasserelektrolyse ist möglich, und die Wasserrückführung kann hier geeignet vorgesehen sein, um Wasser im Verfahren im Sinne eines Kreislaufs optimal zu nutzen. Entsprechend kann das freigesetzte Wasser aus der Hydrierung und/oder der Zersetzung zu Amid, z.B. Formamid, einem Zyklus bei Schritt a) und/oder bei der Wasserelektrolyse wieder zugeführt werden.

Gemäß bestimmten Ausführungsformen wird in Schritt c) und/oder d) Energie durch eine Weiterreaktion von CO bereitgestellt, bevorzugt durch Weiterreaktion von CO in einer Fischer-Tropsch-Synthese. Hiermit kann das vorliegende Verfahren weiter hinsichtlich Synergien im Hinblick auf Folgeprozesse optimiert werden, um die in CO "gespeicherte" Energie sinnvoll für deren Erzeugung zu verwenden, da es eine Vielzahl von möglichen exothermen Folgereaktionen gibt, in denen CO zur Anwendung kommen kann.

Gemäß bestimmten Ausführungsformen wird Abwärme aus der Wasserelektrolyse für die Durchführung von beispielsweise Schritt c) verwendet, wobei nicht ausgeschlossen ist, dass Abwärme hieraus auch zusätzlich oder alternativ für Schritt d) verwendet wird und/oder auch in Schritt b) Anwendung findet. Hierdurch kann die bei der Wasserelektrolyse üblicherweise anfallende Abwärme technisch sinnvoll genutzt werden und die Synergie im vorliegenden Verfahren weiter verbessern.

Entsprechend kann bei einem erfindungsgemäßen Verfahren sowohl bei einer Produktion von CO an einem Standort als auch bei der Aufteilung der Standorte Abwärme anderer Schritte verwendet werden, um die Produktion des CO energieeffizient zu gestalten und somit die Synergie der Verfahrensschritte weiter zu erhöhen.

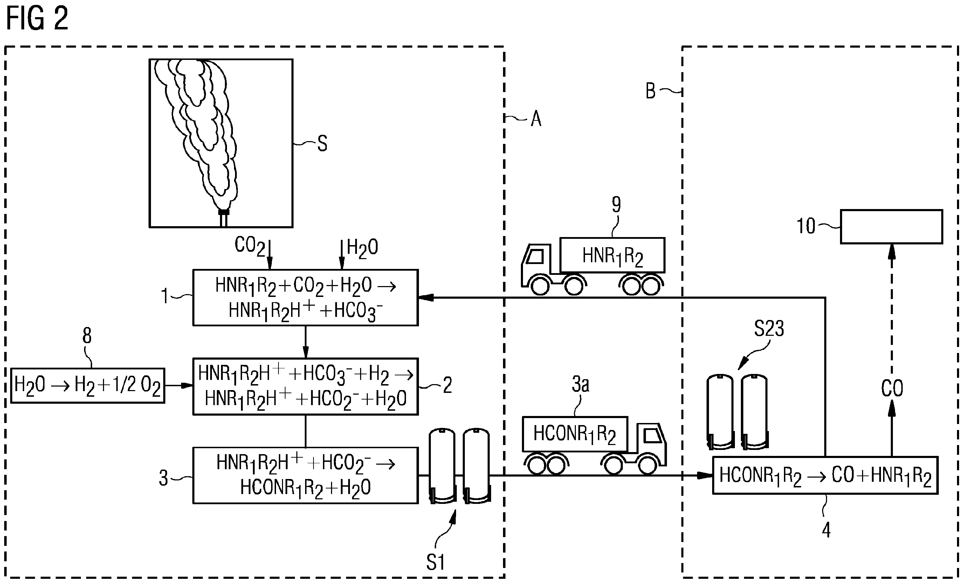

Ein weiteres beispielhaftes erfindungsgemäßes Verfahren mit einem Transport zwischen verschiedenen Standorten ist schematisch in Figur 2 gezeigt, in der die Schritte 1 bis 4 und 8 denen der Figur 1 entsprechen.

Der Produktionsteil A des dargestellten Prozesses stellt hier die Produktion des Amids der Formel $HCONR_1R_2$ als Intermediat und "Lagerprodukt" von CO dar, welches z.B. vorteilhaft an einer $CO_2$-Punktquelle S angesiedelt sein kann. Der Produktionsteil B zeigt hier beispielhaft die Bildung und Weiterverwendung von CO. Das Amid der Formel $HCONR_1R_2$ kann sowohl in Produktionsteil A als auch B in Tanks S1, S23 zwischengespeichert werden und dazwischen transportiert werden in einem Schritt 3a, insbesondere bei Umgebungsdruck an den Weiterverarbeitungsort gebracht werden. Hier erfolgt dann Schritt d) in Reaktion 4, das Amid wird thermisch zersetzt, und das gewonnene CO kann direkt in einem Folgeprozess 10, z.B. einer Fischer-Tropsch-Synthese, weiterverarbeitet werden. Das resultierende Amin kann wiederum zur Produktionsstätte für das Amid zurücktransportiert werden in Schritt 9. Es ist auch möglich, den Schritt der Hydrierung noch räumlich zu trennen, ggf. mit einem entsprechenden Transport von Hydrogencarbonat der Formel $HNR_1R_2H^+ HCO_3^-$.

Bevorzugt können im erfindungsgemäßen Verfahren das Amid, wie beispielsweise Formamid, und/oder das Formiat flüssig bereitgestellt werden, wodurch ein Transport zwischen Reaktoren einfacher und die Moleküldichte sehr viel höher wird. Bei Formamid (Methanamid, m = 45 g/mol) liegt z.B. der Massenanteil von CO (m = 28 g/mol) bei 62%. In 1 $m^3$ Formamid (1 bar, Umgebungstemperatur, Dichte = 1.13 $g/cm^3$) kann somit ca. 703 kg CO gespeichert werden.

Um die gleiche Menge an gasförmigem CO zu speichern (Annahme Gasflasche 200 bar) wären somit 3.1 $m^3$ nötig, was eine Verdreifachung des Volumens darstellt und den Transport und die Sicherheit ineffizienter und gefährlicher macht.

Beim Rücktransport kann z.B. Ammoniak als Amin verflüssigt (900kPa bei 20C) und zurücktransportiert werden. 1 $m^3$ flüssiges $NH_3$ entspricht 682kg, was ca. 40.000 $mol/m^3$ sind. Zum Vergleich: 1 $m^3$ Formamid in der Anlieferung entspricht ca. 25.000 $mol/m^3$. Daher kann der entstehende Ammoniak bei der Zersetzung direkt zurückgeliefert werden, ohne zusätzliche Volumina beim Transport zu benötigen. So das Amin wieder mit $CO_2$ reagiert, wie oben beschrieben, also beispielsweise $CO_2$ zur Trennung von CO und Amin mit verwendet wird, kann natürlich auch ein Transport in Form von Hydrogencarbonat erfolgen.

Durch eine Benutzung eines bei Raumtemperatur oder sogar Transporttemperatur (z.B. bis 40°C oder sogar bis 50°C) flüssigen Amins, z.B. von Diethylamin, als Ausgangsamin kann zudem auf die Verflüssigung verzichtet werden, da dies bei Umgebungstemperatur flüssig ist (siehe Tabelle 1).

Beispielhafte erfindungsgemäße Verfahren sind in Figuren 3 bis 7 schematisch gezeigt.

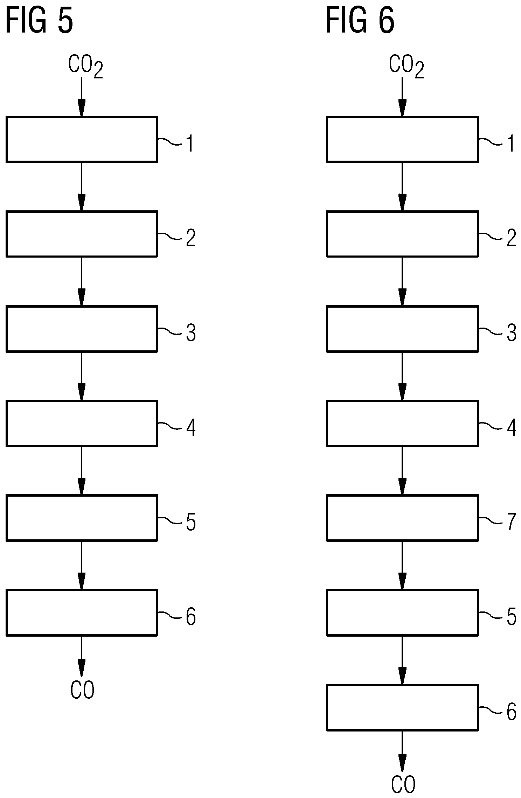

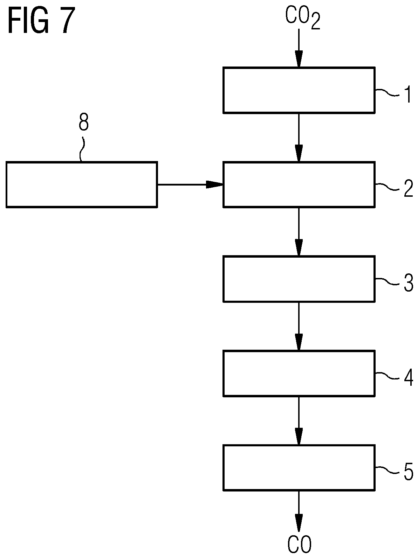

In Figur 3 erfolgt hierbei die Herstellung von CO aus $CO_2$ über die Reaktion 1 in Schritt a), die Reaktion 2 in Schritt b), die Reaktion 3 in Schritt c), die Reaktion 4 in Schritt d), und die Reaktion und Abtrennung 5 in Schritt e). In Figur 4 werden Reaktionen 3 und 4 in einer Reaktion 3a kombiniert, in der Schritte c) und d) zusammengefasst sind. Bei dem in Figur 5 gezeigten Verfahren schließt sich im Vergleich zu Figur 3 nach Reaktion und Abtrennung 5 in Schritt e) noch die Aufreinigung 6 in Schritt f) an. Ausgehend von Figur 5 wird im Verfahren von Figur 6 zudem noch zwischen Schritt d) in Reaktion 4 und Schritt e) in Reaktion und Abtrennung 5 ein Abtrennungsschritt 7 für Lösungsmittel und/oder Wasser vorgesehen. In Figur 7 wird, ausgehend von Figur 3, zudem noch eine Wasserelektrolyse 8 vorgesehen, welche Wasserstoff für Schritt b) in Reaktion 2 bereitstellt. Die Figuren 3 bis 7 dienen hierbei der Darstellung einzelner Aspekte des vorliegenden Verfahrens, wobei jedoch nicht ausgeschlossen ist, dass gewisse Teilaspekte miteinander verbunden werden, als beispielsweise auch die Wasserelektrolyse 8 aus Figur 7 in den Verfahren der Figuren 3 bis 6 vorgesehen ist, etc.

Zudem offenbart ist in einem weiteren Aspekt eine Vorrichtung zur Herstellung von CO aus $CO_2$, umfassend:

- einen ersten Reaktor zur Reaktion von $CO_2$ mit $H_2O$ und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$, der dazu ausgebildet ist $CO_2$ mit $H_2O$ und einem Amin der Formel $HNR_1R_2$ zu reagieren;
- einen zweiten Reaktor zur Reaktion des Hydrogencarbonats der Formel $HNR_1R_2H^+ HCO_3^-$ mit Wasserstoff zu einem Formiat der Formel $HNR_1R_2H^+ HCO_2^-$, der dazu ausgebildet ist, das Hydrogencarbonat der Formel $HNR_1R_2H^+ HCO_3^-$ mit Wasserstoff zu einem Formiat der Formel $HNR_1R_2H^+ HCO_2^-$ zu reagieren; weiter umfassend
- einen dritten Reaktor zur Zersetzung des Formiats der Formel $HNR_1R_2H^+ HCO_2^-$ zu $H_2O$ und einem Amid der Formel $HCONR_1R_2$, der dazu ausgebildet ist, das Formiat der Formel $HNR_1R_2H^+ HCO_2^-$ zu $H_2O$ und einem Amid der Formel $HCONR_1R_2$ zu zersetzen, und
- einen vierten Reaktor zur Zersetzung des Amids der Formel $HCONR_1R_2$ zu CO und einem Amin der Formel $HNR_1R_2$, der dazu ausgebildet ist, das Amid der Formel $HCONR_1R_2$ zu CO und einem Amin der Formel $HNR_1R_2$ zu zersetzen; oder
- einen kombinierten dritten Reaktor zur Zersetzung des Formiats der Formel $HNR_1R_2H^+ HCO_2^-$ zu $H_2O$, CO und einem Amin der Formel $HNR_1R_2$, der dazu ausgebildet ist, das Formiat der Formel $HNR_1R_2H^+ HCO_2^-$ zu $H_2O$, CO und einem Amin der Formel $HNR_1R_2$ zu zersetzen; weiter umfassend
- einen fünften Reaktor zur zumindest teilweisen Reaktion des im kombinierten dritten Reaktor oder im vierten Reaktor erzeugten Amins der Formel $HNR_1R_2$ mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und zur Abtrennung des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht, wobei der fünfte Reaktor dazu ausgebildet ist, das im kombinierten dritten Reaktor oder im vierten Reaktor erzeugte Amin der Formel $HNR_1R_2$ mit einem Fällungsreagenz, bevorzugt mit $CO_2$, zumindest teilweise zur Reaktion zur bringen, wobei eine Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt eine Mischung umfassend CO, ein Hydrogencarbonat der Formel $HNR_1R_2H^+ HCO_3^-$ und ggf. unreagiertes Amin der Formel $HNR_1R_2$, hergestellt wird, und wobei der fünfte Reaktor zudem dazu ausgebildet ist, das Fällungsprodukt der Reaktion des Amins der Formel $HNR_1R_2$ mit dem Fällungsreagenz, bevorzugt das Hydrogencarbonat der Formel $HNR_1R_2H^+ HCO_3^-$, abzutrennen.

Mit der erfindungsgemäßen Vorrichtung kann insbesondere das erfindungsgemäße Verfahren durchgeführt werden. Entsprechend sind bestimmte Ausführungen zum erfindungsgemäßen Verfahren auch auf die erfindungsgemäße Vorrichtung anwendbar und vice versa.

Der erste Reaktor, der zweite Reaktor, der kombinierte dritte Reaktor, der dritte Reaktor, der vierte Reaktor und der fünfte Reaktor sind nicht besonders beschränkt, sofern sie die darin umgesetzten Edukte und erzeugten Produkte beinhalten können. Sie können insbesondere jeweils wie im Zusammenhang mit dem erfindungsgemäßen Verfahren beschrieben ausgeführt sein, also beispielsweise der erste Reaktor als Kristallisator mit Gaseintragsrührer, Packungskolonne oder Blasensäule, der zweite Reaktor als Slurry-Reaktor, der dritte Reaktor als ein mit Katalysator gepackter Rohrreaktor - wobei der Katalysator nicht besonders beschränkt ist - oder als Rohrbündelreaktor, und/oder der vierte Reaktor als Verdampfungskessel, etc. Sie können allesamt in räumlicher Nähe liegen, z.B. jeweils mit einer Entfernung von weniger als 50 km, weiter bevorzugt weniger als 20 km, noch weiter bevorzugt weniger als 10 km, oder einzelne Reaktoren können räumlich auch weiter entfernt sein, also 50 km und mehr voneinander entfernt liegen. Zwischen den Reaktoren können geeignete Leitungen zum Transport der jeweiligen Verbindungen vorgesehen sein, und/oder auch andere Transportmöglichkeiten wie Transportfahrzeuge, z.B. LKWs, Schiffe, etc., wobei Leitungen zwischen den einzelnen Bestandteilen der Vorrichtung bevorzugt sind, um die Vorrichtung integriert auszugestalten und das Verfahren integriert durchzuführen. Der Vorteil im vorliegenden Verfahren liegt darin, dass keine flüchtigen gasförmigen Verbindungen wie CO transportiert werden müssen, sondern dass diese am erwünschten Ort einfach freigesetzt werden können und davor sozusagen als "Vorprodukt" transportiert werden können.

Der fünfte Reaktor kann auch mehrere Reaktorteile umfassen, also beispielsweise einen Reaktorteil zur Fällung und einen Reaktorteil zur Abtrennung. Bevorzugt als fünfter Reaktor ist ein Gaswäscher, in dem der Feststoff unten anfällt und ein Gas oben entweichen kann. Bevorzugt wird ein fünfter Reaktor, insbesondere ein Gaswäscher, im Gegenstrom betrieben, wobei bevorzugt ein Fällungsreagenz, insbesondere $CO_2$ von unten und das Gemisch mit CO von oben eingebracht wird.

Gemäß bestimmten Ausführungsformen umfasst die erfindungsgemäße Vorrichtung einen sechsten Reaktor zur Abtrennung von CO aus dem Produkt umfassend CO und unreagiertes Amin der Formel $HNR_1R_2$, der dazu ausgebildet ist, aus dem Produkt umfassend CO und unreagiertes Amin der Formel $HNR_1R_2$ CO abzutrennen. Auch dieser sechste Reaktor ist nicht besonders beschränkt und ist beispielsweise als mindestens eine Coldbox ausgeführt.

Wenn im fünften Reaktor das Hydrogencarbonat der Formel $HNR_1R_2H^+ HCO_3^-$ gebildet wird, umfasst die erfindungsgemäße Vorrichtung gemäß bestimmten Ausführungsformen weiter eine erste Verbindungseinrichtung zwischen dem fünften Reaktor und dem zweiten Reaktor zur Zuführung des im fünften Reaktor gebildeten Hydrogencarbonats der Formel $HNR_1R_2H^+ HCO_3^-$ vom fünften Reaktor zum zweiten Reaktor, die dazu ausgebildet ist, im fünften Reaktor gebildetes Hydrogencarbonat der Formel $HNR_1R_2H^+ HCO_3^-$ vom fünften Reaktor zum zweiten Reaktor zu führen. Dier erste Verbindungseinrichtung ist nicht besonders beschränkt. Ggf. kann sie auch mit einer zweiten Leitung zwischen dem ersten und zweiten Reaktor teilweise kombiniert sein, wobei dann auch eine Mischeinrichtung in der zweiten Leitung vorgesehen sein kann, die nicht besonders beschränkt ist.

Gemäß bestimmten Ausführungsformen umfasst die erfindungsgemäße Vorrichtung weiter eine Separationsvorrichtung, die in Strömungsrichtung zwischen dem vierten Reaktor und dem fünften Reaktor angeordnet und dazu ausgebildet ist, ein Lösungsmittel und/oder Wasser von dem CO und dem Amin der Formel $HNR_1R_2$ zumindest teilweise abzutrennen. Es entsteht ein Flüssigstrom und ein Gasproduktstrom. Die Separationsvorrichtung ist nicht besonders beschränkt. Nach der Separationsvorrichtung kann in Strömungsrichtung im Flüssigstrom noch eine Flüssigtrennvorrichtung vorgesehen sein, welche den Flüssigstrom derart auftrennt, dass Lösungsmittel zum ersten Reaktor rückgeführt werden kann, während ein zweiter Flüssigstrom enthaltend ggf. entstehende Nebenprodukte der obigen Reaktionen, wie beispielsweise Carbamate, einer Nachreinigungseinrichtung zugeführt werden kann. Zwischen der Separationsvorrichtung oder der Flüssigtrennvorrichtung und dem ersten Reaktor kann eine zweite Verbindungseinrichtung umfasst sein, welche dazu ausgebildet ist, in der Separationsvorrichtung oder der Flüssigtrennvorrichtung abgetrenntes Lösungsmittel dem ersten Reaktor zuzuführen. Auch diese zweite Verbindungseinrichtung ist nicht besonders beschränkt.

Gemäß bestimmten Ausführungsformen umfasst die erfindungsgemäße Vorrichtung weiter eine erste Rückführeinrichtung für das Amin der Formel $HNR_1R_2$, welche dazu ausgebildet ist, Amin der Formel $HNR_1R_2$ in Strömungsrichtung nach dem fünften Reaktor oder dem sechsten Reaktor zum ersten Reaktor zurückzuführen. Auch diese ist nicht besonders beschränkt und kann eine Leitung, eine Transportmöglichkeit, etc. sein.

Gemäß bestimmten Ausführungsformen umfasst die erfindungsgemäße Vorrichtung weiter eine Wasserelektrolyseeinrichtung, die dazu ausgebildet ist, Wasser zu elektrolysieren und dem zweiten Reaktor Wasserstoff bereitzustellen. Diese ist ebenfalls nicht beschränkt, befindet sich jedoch bevorzugt in räumlicher Nähe zum zweiten Reaktor, bevorzugt mit einer Entfernung von weniger als 50 km, weiter bevorzugt weniger als 20 km, noch weiter bevorzugt weniger als 10 km, um Wasserstoff geeignet, bevorzugt in mindestens einer Leitung, zum zweiten Reaktor führen zu können.

Zudem kann hierbei auch über eine geeignete erste Wärmekopplungsmethode und eine entsprechende erste Wärmekopplungsvorrichtung vorgesehen, die dazu ausgebildet ist, Abwärme aus der Wasserelektrolyseeinrichtung dem dritten Reaktor und ggf. dem vierten Reaktor oder dem kombinierten dritten Reaktor zur Verfügung zu stellen, z.B. einen Wärmetauscher.

Zum ersten Reaktor kann eine erste Leitung führen, die dazu ausgebildet ist, dem ersten Reaktor $CO_2$ zuzuführen. Zwischen dem ersten und zweiten Reaktor kann eine zweite Leitung, zwischen dem zweiten und dritten Reaktor bzw. dem zweiten und kombinierten dritten Reaktor eine dritte Leitung, zwischen dem dritten und vierten Reaktor eine vierte Leitung, zwischen dem vierten und fünften Reaktor eine fünfte Leitung, und/oder zwischen dem fünften und dem sechsten Reaktor eine sechste Leitung vorgesehen sein, welche allesamt nicht besonders beschränkt sind. In der zweiten Leitung kann ein erster Wärmetauscher vorgesehen sein, in der dritten Leitung ein zweiter Wärmetauscher und/oder eine erste Wärmekopplungseinrichtung, in der vierten Leitung eine zweite Wärmekopplungseinrichtung, in der fünften Leitung ein oder mehrere Wärmetauscher, die auch dem ersten und/oder zweiten Wärmetauscher entsprechen können, in der fünften Leitung zudem eine Produktgas-Kühlvorrichtung, und/oder in der ersten Rückführeinrichtung eine Vorheizeinrichtung, welche allesamt nicht besonders beschränkt sind und die im Verfahren beschriebenen Kühl- und/oder Vorwärmvorgänge durchführen können. Die erste und/oder zweite Wärmekopplungseinrichtung ist gemäß bestimmten Ausführungsformen dazu ausgebildet, Abwärme aus einer Folgereaktion des CO, z.B. einer Fischer-Tropsch-Synthese, der jeweiligen Leitung zur Verfügung zu stellen. Gemäß bestimmten Ausführungsformen umfasst die erfindungsgemäße Vorrichtung eine Einrichtung zur Weiterreaktion von CO, insbesondere eine Fischer-Tropsch-Einrichtung, welche nicht besonders beschränkt ist und dazu ausgebildet ist, eine Fischer-Tropsch-Synthese durchzuführen.

Der erste Reaktor kann zudem über geeignete Zuführeinrichtungen, z.B. für $CO_2$ und ggf. $H_2O$, verfügen, die dazu ausgebildet sind, dem ersten Reaktor $CO_2$ und ggf. $H_2O$ zuzuführen.

Beispielhafte erfindungsgemäße Vorrichtungen sind schematisch in Figuren 8 bis 17 gezeigt, wobei nicht ausgeschlossen ist, dass einzelne in bestimmten Figuren gezeigte Vorrichtungsbestandteile auch in Vorrichtungen anderer Figuren zur Anwendung kommen können.

Gemäß Figur 8 wird über die erste Leitung 101 $CO_2$ dem ersten Reaktor 11 zugeführt, dort hergestelltes Hydrogencarbonat über die zweite Leitung 102 dem zweiten Reaktor 12 zugeführt, dort hergestelltes Formiat über die dritte Leitung 103 dem dritten Reaktor 13 zugeführt, dort hergestelltes Amid über die vierte Leitung 104 dem vierten Reaktor 14 zugeführt, dort hergestelltes CO und Amin über die fünfte Leitung 105 dem fünften Reaktor 15 zugeführt, und über die CO-Produktleitung 100 CO entnommen.

Die Vorrichtung der Figur 9 entspricht der der Figur 8, wobei im fünften Reaktor 15 $CO_2$ zur Fällung verwendet wird und über die erste Verbindungseinrichtung 115 Hydrogencarbonat dem zweiten Reaktor 12 zugeführt wird.

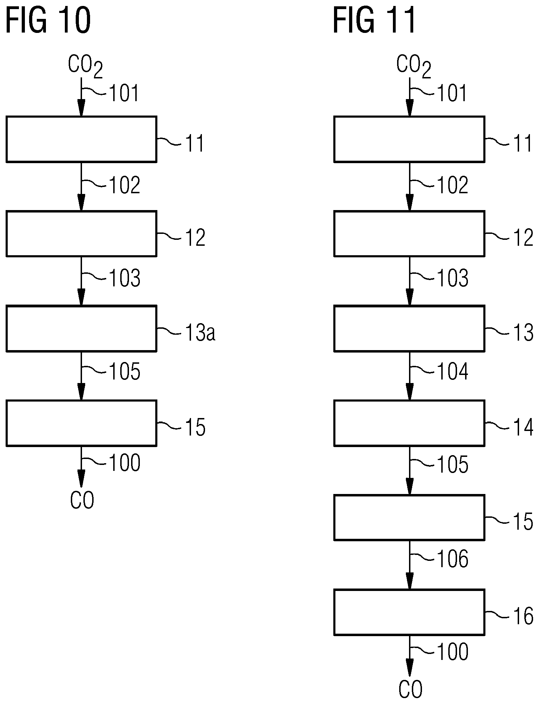

Die Vorrichtung der Figur 10 basiert ebenfalls auf der der Figur 8, wobei anstelle des dritten Reaktors 13, der vierten Leitung 14 und des vierten Reaktors 14 der kombinierte dritte Reaktor 13a tritt.

In der in Figur 11 gezeigten Vorrichtung schließt sich an den fünften Reaktor 15 der Figur 8 eine sechste Leitung 106 an, in der ein Produkt umfassend CO und ggf. unreagiertes Amin zum sechsten Reaktor 16 geleitet wird, bevor aus diesem CO über die CO-Produktleitung 100 entnommen wird.

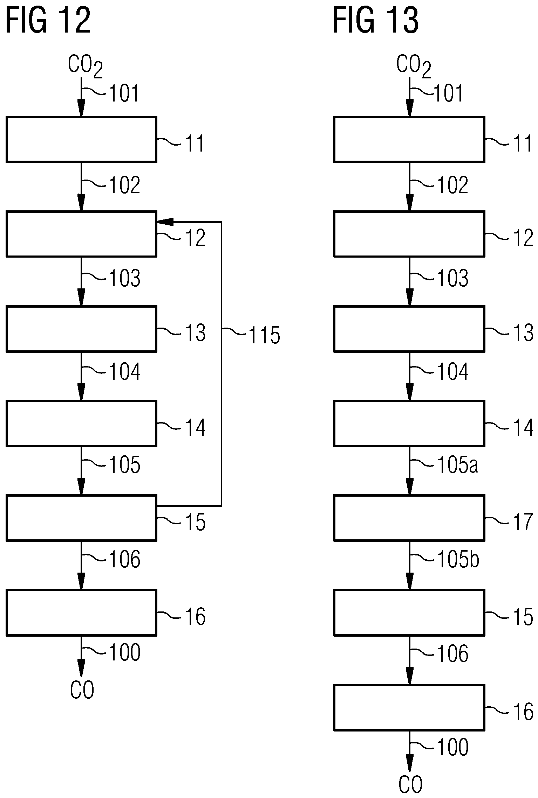

Die in Figur 12 gezeigte Vorrichtung entspricht einer Kombination der Vorrichtungen der Figuren 9 und 11.

Die Vorrichtung der Figur 13 basiert auf der der Figur 11, wobei zwischen dem vierten Reaktor 14 und dem fünften Reaktor 15 eine Separationsvorrichtung 17 vorgesehen ist, wobei die fünfte Leitung in eine fünfte Teilleitung a 105a und eine fünfte Teilleitung b 105b vor bzw. nach der Separationsvorrichtung 17 getrennt ist.

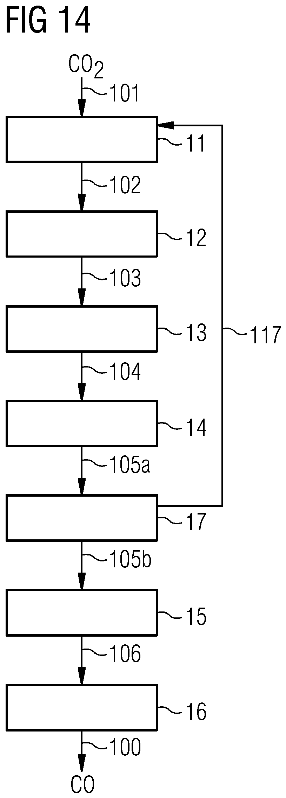

Basierend auf der Vorrichtung der Figur 13 weist die Vorrichtung der Figur 14 zusätzlich eine zweite Verbindungseinrichtung 117 zwischen der Separationsvorrichtung 17 und dem ersten Reaktor 11 auf.

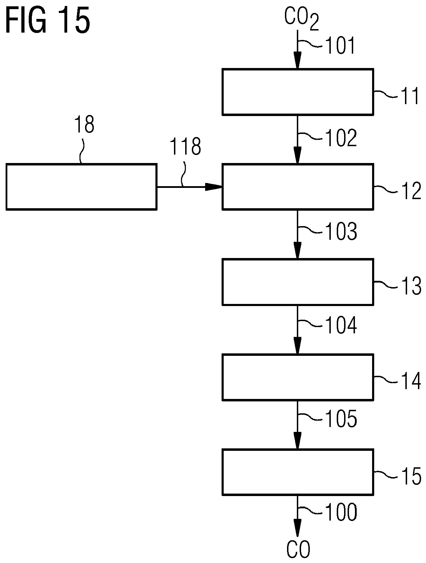

Die Vorrichtung der Figur 15 basiert wiederum auf der Vorrichtung der Figur 8, wobei dem zweiten Reaktor 12 Wasserstoff aus der Wasserelektrolyseeinrichtung 18 über eine Wasserstoffleitung 118 zugeführt wird.

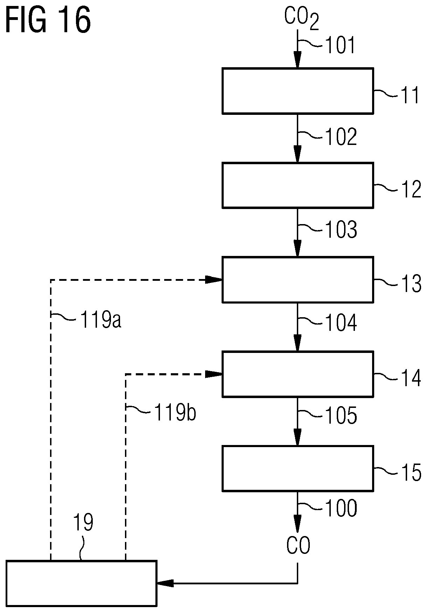

In der in Figur 16 dargestellten Vorrichtung, die ebenfalls auf der Vorrichtung der Figur 8 beruht, wird über die CO-Produktleitung 100 das CO zu einer Fischer-Tropsch-Einrichtung 19 als beispielhafte Weiterverarbeitungsvorrichtung für CO geleitet, welche zudem über eine erste Wärmekopplungseinrichtung 119a und eine zweite Wärmekopplungseinrichtung 119b eine Wärmekopplung zum dritten Reaktor 13 bzw. vierten Reaktor 14 erfolgt, wobei die Wärmekopplung alternativ auch zu der dritten Leitung 103 bzw. vierten Leitung 104 erfolgen könnte.

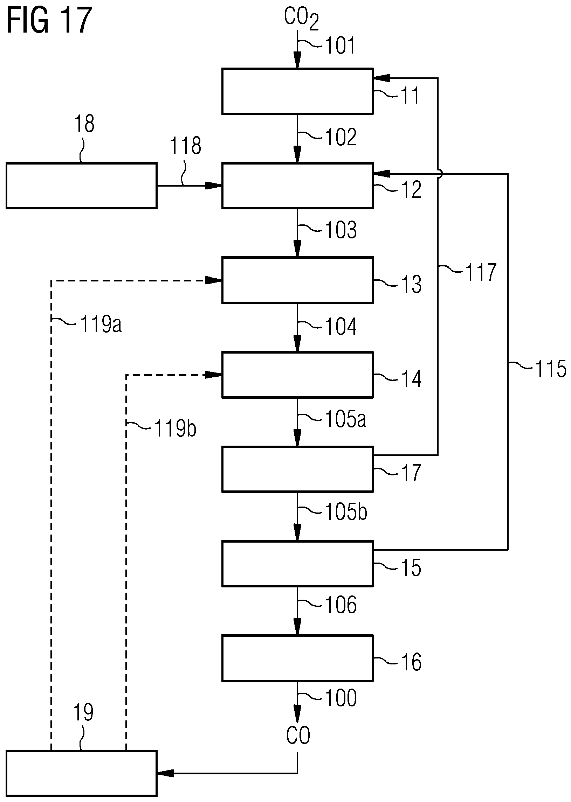

Die Vorrichtung der Figur 17 entspricht dann final einer Kombination der Vorrichtungen der Figuren 8, 9, 11 und 13 bis 16. Auch hier könnte jedoch, wie in Figur 10, der dritte Reaktor 13, die vierte Leitung 104 und der vierte Reaktor 14 durch einen kombinierten dritten Reaktor 13a ersetzt sein.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

Im Weiteren wird anhand eines Beispiels der Zyklus einer CO-Herstellung zur theoretischen Energiebetrachtung im Vergleich zu derzeit verwendeten Methoden genauer beschrieben. Dabei soll beispielhaft Ammoniak ($R_1 = R_2 = H$) als einfachstes Amin benutzt werden.

Die Schritte des beispielhaften Verfahrens sind wie folgt:

Schritt a): Ammoniumhydrogencarbonat wird bereits großindustriell über das Einleiten von $CO_2$ in eine konzentrierte Ammoniaklösung bei 35 - 40°C hergestellt. Ca. 100.000t/y wurden im Jahr 1997 davon hergestellt. Ammoniumhydrogencarbonat fällt bei der Produktion aus, kann abzentrifugiert werden und bei Bedarf bei 40°C getrocknet werden. Aminwäschen sind gängige Methoden, um beispielsweise $CO_2$ aus Rauchgasen zu waschen.

Schritt b): Gelöstes Ammoniumhydrogencarbonat wird mit Wasserstoff zu Ammoniumformiat, z.B. unter Druck in einem Autoklaven, hydriert. Beispielsweise kann dies bei 20-40°C und einem Druck von Wasserstoff von 2,75 MPa erfolgen, wodurch eine hohe Ausbeute und ein hoher Umsatz erzielt werden können, wie beispielhaft in Su et al.; (2015), "Highly Efficient Hydrogen Storage System Based on Ammonium Bicarbonate/Formate Redox Equilibrium over Palladium Nanocatalysts"; ChemSusChem 2015, 8, 813-816 beschrieben.

Schritt c): Der Haupteinsatz von Ammoniumformiat in der Industrie ist die Bereitstellung von Formamid durch die Zersetzung des Formiats. Dabei wird Ammoniumformiat auf über 170°C erhitzt. Dabei zerfällt dieses zu Formamid und Wasser. Eine mögliche Umsetzung kann in Patent US1582675: Herstellung von Formamid aus Ammoniumformiat eingesehen werden, bei dem reines Formamid extrahiert wird.

Schritt d): Formamid zersetzt sich bei Temperaturen ab 180°C ohne Katalysator weiter zu CO und Ammoniak, wobei nur Spuren von HCN gemessen werden können. Bei höheren Temperaturen kann HCN hergestellt werden. Erst bei höheren Temperaturen zwischen 600 und 1000°C wird die Zersetzung zu HCN und $H_2O$ dominant.

In einem nachfolgenden Schritt wird der anfallende Ammoniak wieder in Wasser gelöst und teilweise mit $CO_2$ gefällt und weiterhin final abgetrennt und somit vom CO getrennt werden. Daraus kann ein hoher Anteil von CO (optimal pures CO) im Produktgas resultieren, und es kann ein geschlossener Ammoniakkreislauf durch Rückführung zu Schritt a) etabliert werden.

Weiterhin kann das freigesetzte Wasser aus der Hydrierung und/oder der Zersetzung zu Formamid dem Zyklus bei Schritt a) und/oder bei der Wasserelektrolyse wieder zugeführt werden.

Durch dieses Verfahren können verschiedene Probleme gelöst werden, beispielsweise bei der Bereitstellung der Energie, womit ein Energieeffizienzproblem vermieden wird. Wie beispielsweise in Figur 1 schematisch gezeigt wird nur direkt elektrische Energie bei der Produktion von Wasserstoff benötigt.

Die Wärmezufuhr bei der Zersetzung (Schritt c) und d)) kann durch Wärmekopplung anderer chemischer Produktionen bereitgestellt werden. Ein Beispiel ist die Fischer-Tropsch-Synthese (Arge-Verfahren). Die Produkte aus CO und $H_2$ sind Paraffine/Olefine, die wiederum zu Treibstoffen weiterverarbeitet werden können.

Der Prozess wird bei ca. 220 bis 240 °C durchgeführt. Thermodynamisch ist die Reaktion stark exotherm mit -158 kJ/mol (pro -$CH_2$- Glied), was ca. 3,5 $GJ/t_{CO}$ entspricht.

$$CO + H_2 \rightarrow -CH_2- + H_2O, \Delta H_R = -158 \text{ kJ/mol}$$

Dabei werden für die Zersetzungsschritte c) und d) thermodynamisch - beispielhaft für Ammoniumformiat, welches zu Formamid und final zu CO zerfällt - nur 94,6 bzw. 19,4 kJ/mol benötigt.

$$[NH_4][COOH] (s) \rightarrow HCONH_2 (l) + H_2O (1), \Delta H_R = 19.35 \text{ kJ/mol}$$

$$HCONH_2 (l) \rightarrow CO (g) + NH_3 (g), \Delta H_R = 94.57 \text{ kJ/mol}$$

In Summe werden thermodynamisch für die Zersetzung von Ammoniumformiat zu CO nur ca. 114 $kJ/mol_{CO}$ benötigt. Die benötigte Energie kann daher durch die Abwärme des Fischer-Tropsch-Prozesses, welche 158 $kJ/mol_{CO}$ ist, gedeckt werden. Diese fällt zudem schon auf dem erforderlichen Temperaturniveau an.

Auch bei einer Aufteilung der Produktionsschritte, wie beispielsweise in Figur 2 aufgeführt, ist dies immer noch der Fall. Auch hier ist die Abwärme des Fischer-Tropsch-Verfahrens ausreichend, um die Zersetzung des Formamids zu gewährleisten (-158 kJ/mol Abwärme zu 94,6 kJ/mol benötigte Energie).

Im ersten Schritt wird die Energie für die Zersetzung von Ammoniumformiat aus der Abwärme des Wasserstoffelektrolyseurs genommen. Die typische Energieeffizienz liegt bei 90% oder weniger (M. Schalenbach, G. Tjarks, M. Carmo, W. Lueke, M. Mueller, and D. Stolten, J. Electrochem. Soc., 163 (2016) F3197). Bei einer theoretischen Energie von 285,83 kJ/mol würden damit 31,76 kJ/mol Abwärme anfallen.

$$H_2O \text{ (l)} \rightarrow \tfrac{1}{2} O_2 \text{ (g)} + H_2 \text{ (g)}, \Delta H_R = 285{,}83 \text{ kJ/mol}$$

Die Zersetzung von Ammoniumformiat benötigt dagegen nur 19,35 kJ/mol und kann durch die Abwärme des Wasserelektrolyseurs zur Verfügung gestellt werden.

Sowohl bei einer Produktion von CO an einem Standort als auch bei der Aufteilung der Standorte kann also Abwärme anderer Schritte verwendet werden, um die Produktion des CO energieeffizient zu gestalten.

In Summe wird daher nur die Energie für die Produktion von Wasserstoff elektrisch bereitgestellt, währenddessen die benötigten Energien der endothermen Zersetzungsprozesse von Formiat und Formamid durch Abwärme des Fischer-Tropsch-Prozesses und/oder der Wasserelektrolyse gedeckt wird. Dadurch ist die Produktionskette besonders energieeffizient.

Zur Verdeutlichung soll dieser Prozess mit der direkten $CO_2$ Elektrolyse und dem Sabatier-Prozess verglichen werden:

Der Sabatier-Prozess beinhaltet 3 Schritte:

1. Wasserelektrolyse:

$$2 H_2O \text{ (l)} \rightarrow O_2 \text{ (g)} + 2 H_2 \text{ (g)}, \Delta H_R = 571{,}66 \text{ kJ/mol}$$

2. Sabatier:

$$4 H_2 \text{ (g)} + CO_2 \text{ (g)} \rightarrow CH_4 \text{ (g)} + 2 H_2O \text{ (1)},$$

$$\Delta H_R = -255{,}75 \text{ kJ/mol}$$

3. Partielle Oxidation:

$$CH_4 \text{ (g)} + \tfrac{1}{2} O_2 \text{ (g)} \rightarrow CO + 2 H_2 \text{ (g)}, \Delta H_R = -32{,}93 \text{ kJ/mol}$$

In Summe ergibt sich wieder die gleiche Reaktionsgleichung: $CO_2 \rightarrow CO + \tfrac{1}{2} O_2$, $\Delta H_R = 282{,}98$ kJ/mol (Rundungsfehler)

Hierbei ist jedoch zu beachten, dass für die Herstellung von 1 mol CO, 2 mol $H_2$ durch die Elektrolyse erzeugt werden müssen. Daher liegt der elektrische Energieaufwand thermodynamisch bei 571,66 kJ/mol und unter Einrechnung der Effizienz von ca. 90% bei ca. 635 kJ/mol.

In einer $CO_2$ Elektrolyse treten hingegen folgende Halbzellreaktionen auf (siehe z.B. Liu et al.; (2018), "CO2 Electrolysis to CO and O2 at High Selectivity, Stability and Efficiency Using Sustainion Membranes"; Journal of Electrochemical Society, 165 (15) J3371 - J3377 (2018)):

1. Kathode:

$$CO_2 \text{ (g)} + H_2O + 2e\text{-} \rightarrow CO + 2OH^-, \Delta H_R = 108{,}75 \text{ kJ/mol}$$

2. Anode:

$$H_2O \rightarrow 2H^+ + 2e\text{-}, \Delta H_R = 285{,}83 \text{ kJ/mol}$$

Neutralisation:

$$2H^+ + 2OH^- \rightarrow 2\ H_2O,\ \Delta H_R = -111,61\ kJ/mol$$

In Summe folgt daraus die Gleichung wie oben bereits gezeigt.

Problematisch ist dabei, dass in der Zellreaktion elektrisch Energie aufgewendet werden muss, um $H_2O$ zu Hydroxid zu spalten. Dadurch sinkt bereits intrinsisch die Energieeffizienz. Hier muss also thermodynamisch bereits 394,58 kJ/mol aufgewendet werden (anstatt der theoretischen 282,98 kJ/mol). Mit einer Effizienz von ca. 50% (im Vergleich zur Wunschreaktion, siehe Liu et al.; (2018), "CO2 Electrolysis to CO and O2 at High Selectivity, Stability and Efficiency Using Sustainion Membranes"; Journal of Electrochemical Society, 165 (15) J3371 - J3377 (2018)) sind dann sogar ca. 566 kJ/mol nötig. Dieser Energieaufwand ist aber immer noch geringer als die thermochemische Route über den Sabatier-Prozess.

Die Vorteile des hier dargestellten Verfahrens ergeben sich auch durch die Möglichkeit der Wärmeintegration. Der einzige elektrische Energieaufwand liegt hier bei der Wasserstoffelektrolyse, die thermodynamisch 285,83 kJ/mol benötigt. Die weiteren thermischen Energien können durch geschickte Kombination mit anderen chemischen Produktionen, bei denen Abwärme anfällt, kompensiert werden. Daher liegt der elektrische Energieaufwand bei 90% Effizienz des Elektrolyseurs beispielsweise für Ammoniak als Amin bei 317.6 kJ/mol und ist damit deutlich effizienter als die anderen Routen.

Durch die Unterteilung des Verfahrens in mehrere Schritte, und dem Vorteil der Lagerung und des Transportes von Amid, z.B. Formamid, ist es möglich, an einer $CO_2$-Quelle Formiat oder Amid zu produzieren, und erst am gewünschten Weiterverarbeitungsort CO aus der thermischen Zersetzung zu gewinnen. Bei der Weiterverarbeitung des CO zu beispielsweise Kraftstoffen oder weiteren höherwertigen Chemikalien fällt dabei am gleichen Ort die Abwärme an, die für die Zersetzung des Formamids gebraucht wird, d.h. die Zersetzungs- und Weiterverarbeitungssequenzen passen auch örtlich zusammen.

Dabei ist es vorteilhaft, wenn das dabei erhaltene Amin bei Umgebungstemperatur flüssig ist oder in Wasser gelöst werden kann. So wird ein einfacher Rücktransport gewährleistet. Aufgrund des leichten Transports können die Prozesse $CO_2$-Absoprtion, Hydrierung, Freisetzung auch örtlich getrennt sein, ohne dass kritische Gase transportiert werden müssen.

Beispiel 2

Zur weiteren Veranschaulichung des Verfahrens wird eine optimierte Prozesssimulation mit Ammoniak als Absorbens durchgeführt.

In Figur 18 ist die Prozesssimulation des Prozesses mit einzelnen Komponenten in AspenPlus V11.0 mit den Schritten a) bis f) und weiteren Schritten dargestellt.

Das System bestehend aus den in Tabelle 2 dargestellten Komponenten wurde mit der Stoffeigenschaftsmethode ENRTL-RK berechnet. Reine Gasphasensysteme wurden mit der Methode Soave-Redlich-Kwong (SRK) berechnet (Methoden in den integrierten Datenbanken vorhanden). Das Fließbild besteht aus den Prozessschritten a) bis f) sowie der Wärmeintegration des Produktstromes und der Fischer-Tropsch-Anlage (119a, 119b). Die Aufreinigung des Kohlenmonoxids in einer Coldbox ist ebenfalls Teil des Fließbildes und somit Teil der Energiebilanz.

Tabelle 2: Komponenten und relevante Ströme des Prozesses

| Symbol (*1) | Beschreibung/Zweck | Symbol (*2) | Beschreibung/Zweck |
|---|---|---|---|
| H2O | Wasserzufuhr | 11 (r) | Erster Reaktor: Ammoniakwäsche (Schritt a) |
| NH3 | Ammoniakzufuhr | MIX1 (p) | Mischeinrichtung: Flüssigphasenrezyklierung |
| R1, R2 | Rückgeführter Ammoniak über erste Rückführeinrichtung | HR2 (p) | Erster Wärmetauscher: Wärmeintegration Produktstrom |
| CO2 | $CO_2$-Zufuhr | P (p) | Pumpe: Förderung auf Reaktionsdruck vor Schritt b) |
| H2 | Wasserstoffzufuhr | D (p) | Kompressor: Komprimierung des Wasserstoffs auf Reaktionsdruck |
| CO | CO Produktgasstrom | C1, C2 (p) | Kühleinrichtungen: Kühlung der Ströme auf Reaktionstemperatur |

(fortgesetzt)

| Symbol (*1) | Beschreibung/Zweck | Symbol (*2) | Beschreibung/Zweck |
|---|---|---|---|
| 120 | Purge-Strom zur Vermeidung von Ackumulation und zur teilweisen Abtrennung des im Schritt c) entstandenen Wassers | 12 (r) | Zweiter Reaktor: Heterogenkatalysierte Hydrierung des Ammoniumcarbonats (Schritt b) |
| 121 | Gasrezyklierung in Schritt a) | HR1 (p) | Zweiter Wärmetauscher: Wärmeintegration Produktstrom |
| | | 119a (p) | Erste Wärmekopplungseinrichtung: Wärmeintegration Fischer-Tropsch-Anlage |
| | | 13 (r) | Dritter Reaktor: Formiat-Zersetzung (Schritt c) |
| | | 119b (p) | Zweite Wärmekopplungseinrichtung: Wärmeintegration Fischer-Tropsch-Anlage |
| | | 14 (r) | Vierter Reaktor: Zersetzung des Formiats (Schritt d) |
| | | 17 (t) | Separationsvorrichtung: Produktstromtrennung Flüssig-Gasphase |
| | | C3 (p) | Produktgas-Kühlvorrichtung: Kühlung des Gasstromes zur Erhöhung der Hydrogencarbonat-Ausbeute |
| | | SPLIT1 (t) | Flüssigtrennvorrichtung: Abtrennung des bei der Hydrierung entstandenen Wassers sowie einen Teil der Nebenprodukte und Rezyklierung des Wassers für Schritt a) |
| | | SPLITCO2 | CO2-Splitter zum Trennen der Zufuhr von $CO_2$ zum ersten Reaktor 11 und fünften Reaktor 15 |
| | | C4 (p) | Flüssigstrom-Kühlvorrichtung: Kühlung des Flüssigstromes zur Erhöhung der Hydrogencarbonat-Ausbeute |
| | | 15 (t) | Fünfter Reaktor: Aufreinigung des CO durch erneute Abtrennung von Ammoniumhydrogencarbonat |
| | | 16a, 16b (t) | Coldbox: Abtrennung des Ammoniaks |
| | | E (p) | Vorheizeinrichtung: Vorheizung des rezyklierten Ammoniaks |
| | | 18 | Wasserelektrolyseeinrichtung |
| | | 19 | Fischer-Tropsch-Einrichtung |
| *1: Relevante Ströme *2: Reaktions(r)- und trenntechnische(t) Apparate und Peripherie (p) | | | |

Entsprechend dem Aufbau ergeben sich die folgenden Leitungen mit entsprechenden Strömen:

101: erste Leitung mit $CO_2$
102a, 102b, 102d, 102d, 102e: zweite Leitung mit Ammoniumhydrogencarbonat
103a, 103b, 103c: dritte Leitung mit Ammoniumformiat
104a, 104b: vierte Leitung mit Formamid
105a1, 105a2, 105a3: fünfte Teilleitung a mit CO, Ammoniak und Wasser vor Wasserabtrennung
105b1, 105b2: fünfte Teilleitung b mit CO, Ammoniak und Restwasser nach Wasserabtrennung (Gasproduktstrom)

117a, 117b, 117c: Zweite Verbindungseinrichtung mit rückgeführtem Wasser (Flüssigstrom)

106a, 106b: sechste Leitung mit CO und Ammoniak

100: CO-Produktleitung umfassend im Wesentlichen CO oder nur CO

H2-1, H2-2: Zuführleitungen für Wasserstoff

CO2-15: $CO_2$-Zuführleitung zum fünften Reaktor 15

115: erste Verbindungseinrichtung mit rückgeführtem Ammoniumhydrogencarbonat

Das Produkt umfassend CO 106a enthält einen größeren Anteil an Ammoniak, welches für die weitere Verwendung des Produktes CO in der Prozesskette abgetrennt wird. Dies geschieht über einen kryotechnischen Prozess in Coldboxen 16a,b. Das herabgekühlte Ammoniak wird zunächst durch den Wärmetauscher E vorgewärmt und wiederum Schritt a) im ersten Reaktor 11) hinzugeführt, wodurch ein geschlossener Ammoniakkreislauf gewährleistet wird.

Aus simulationstechnischen Gründen sind die erste Rückführeinrichtung R2 und der Strom NH3 nicht miteinander verbunden.

In Schritt a) wird der Wasseranteil möglichst gering gehalten (25,6 Gew.% Ammoniak, 36,2 Gew.% $CO_2$, Rest Wasser), um den Energieaufwand der Folgeprozesse gering zu halten. Ansonsten entspricht Schritt a) im Prinzip einer konventionelle Aminwäsche, wobei sich im berechneten Prozessbeispiel der Wasser- und $CO_2$-Anteil im ersten Schritt a) jedoch zur Aminwäsche unterscheidet. In der konventionellen Aminwäsche sind die $CO_2$- und Ammoniakbeladungen deutlich kleiner und damit der Wasseranteil größer.

Im Fall des gerechneten Prozessbeispiels wird mit einem leicht überstöchiometrischen Verhältnis ($NH_3/H_2O$= 1,4) eine Förderung von reinem Feststoff vermieden.

Im Fall der hier gerechneten wasserarmen Konzeptionierung der Anlage setzt sich das Produktgemisch aus 5,6 $m^3$/Tag einer wässrigen Phase und 17,3 $m^3$/Tag einer festen Phase (zum Großteil Ammoniumhydrogencarboant) zusammen. Dies erfordert einen Reaktionsapparat, der für ein breiförmiges und abrasives Produktgemisch geeignet ist, deshalb können kontinuierlichere Kristallisatoren mit Gaseintragsrührer als erster Reaktor 11 eingesetzt werden.

Zur Förderung des entstehenden breiartigen Gemisches eigenen sich rotierende Verdrängerpumpen wie Exzenterschneckenpumpen als Pumpe P.

Durch den Einsatz anderer, beispielhaft der in Tabelle 1 aufgeführten Amine, ist es möglich die Selektivität weiter zum Hydrogencarbonat zu erhöhen.

Für Schritt b) wird apparatetechnisch der Prozessschritt in einem Slurry-Reaktor mit einem hochdispersen Palladiumkatalysator durchgeführt. Die Reaktionsenthalpie der exothermen Hydrierung beträgt -21,359 kJ/mol. Die damit im größeren Maßstab notwendige Wärmeabfuhr aus dem Reaktor kann für die Vorheizung des nächsten Schrittes c) genutzt werden.

Die Prozessbedingungen der Hydrierung im Slurry-Reaktor sind für die Simulation bei 60 °C und 27,5 bar angesiedelt. Zusätzlich zur elektrochemischen Verdichtung des Wasserstoffs muss dieser deshalb zusätzlich komprimiert und anschließend auf die Reaktionstemperatur des 2. Schrittes gebracht werden. Der hierfür nötige Energieaufwand für die isentrope Kompression im Kompressor D bei einem Wirkungsgrad von 72 % und der benötigten Kühlung (C2) beträgt in Summe 0,1 MW.

Die Förderung des mehrphasigen Reaktandengemisches auf Reaktionsdruck mit Pumpe O übernimmt beispielhaft eine Exzenterschneckenpumpe mit anschließender Kühlung (C1). Auf Grund des inkompressiblen Charakters des breiförmigen Reaktionsgemisches ist die Kompression energetisch mit einem geringen Aufwand behaftet.

Das im Prozessschritt b) anfallende Wasser kann durch Rückintegration (Prozessströme ab 105a1) als internes Wärmeträgermedium zur Beheizung des gesamten Prozesses genutzt werden und wird erst im späteren Verlauf des Prozesses abgetrennt (SPLIT1), um eine Akkumulation von Nebenprodukten zu vermeiden. Durch eine Aufreinigung des mit Nebenprodukten behafteten Purge-Stroms 120 ist eine nahezu vollstände Rückgewinnung des im Prozess verwendet Ammoniaks möglich. Des Weiteren ist das aufgereinigte Wasser sowohl als Prozesswasser (Strom $H_2O$) also auch ggf. nach Entfernung der ionischen Komponenten dem Elektrolyseur zuführbar.

Der Reaktionsschritt c) im dritten Reaktor 13 ist mit einer Reaktionsenthalpie von 94,6 kJ/mol stark endotherm, weshalb davon auszugehen ist, dass neben der Vorheizung auf einer Betriebstemperatur von 140 °C in bzw. nach Schritt b) der Reaktor selbst eine große Wärmesenke darstellt. Diese Senken können durch die Rückintegration des Produktstromes (Vorwärmung mit zweitem Wärmetauscher HR1) und der Integration der Abwärme des Fischer-Tropsch-Prozesses über die erste Wärmekopplungseinrichtung 119a ausgeglichen werden.

Der Reaktionsschritt c) läuft in der flüssigen Phase ab, jedoch werden die im Schritt a) gelösten Gase im Wasser beim Aufheizen des Reaktionsgemisches ausgetrieben. Zudem befindet sich bei einem Reaktionsdruck von 1 bar ein großer Teil des am Prozess beteiligten Wassers in der Gasphase. Aus diesem Grund ist eine mögliche Reaktorkonfiguration ein mit Katalysator gepackter Rohrreaktor oder ein Rohrbündelreaktor.

Zur Erhöhung des Umsatzes kann Ammoniak der Gasphase zusätzlich hinzugegeben werden.

Alternativ kann das im vorherigen Reaktionsschritt entstandene Wasser bzw. das Absorbens aus Schritt a) vor der Vorheizung des Reaktionsgemisches durch Destillation unter Nutzung der Abwärme des Fischer-Tropsch-Prozesses abgetrennt werden. Dies ermöglicht kleinere Massenströme in Schritten c) und d) und der anschließenden Aufreinigungssequenz, erschwert jedoch die Förderung des teilweise als Feststoff vorliegenden Reaktionsgemisches.

Für Schritt d) wurde bei ersten Zersetzungsversuchen von Formamid die Gasphase analysiert. Dabei wurde das Mess-Setup davor mit Stickstoff gespült. Formamid wurde auf 220°C erhitzt bis es zu einer regelmäßigen Blasenbildung gekommen ist. Entstehender Ammoniak und evtl. HCN wurden abgetrennt. Die Ergebnisse der anderen Gasprodukte können in der darunter stehenden Tabelle 3 eingesehen werden.

Tabelle 3: Gasanalyse-Ergebnisse für Schritt d) [Vol. %]

| CO | 83,0% |
|---|---|
| $H_2$ | 0,06% |
| $CO_2$ | 0,21% |
| $N_2$ | 11,1% |
| $O_2$ | 0,33% |
| Gesamt | 94,7% |
| CO:$H_2$ | 1376 |

Dabei ist zu beachten, dass der Rest-Stickstoff aus der Spülung der Apparatur kommt. Mögliche gasförmige Produkte, die auch in Schwab, G.-M. (1950), Über den Zerfall von Formamid. Z. Anorg. Chem., 262: 41-48. doi:10.1002/zaac.19502620107 analysiert wurden, sind kaum nachzuweisen. Wasserstoff und $CO_2$ sind nur in sehr geringen Mengen enthalten. Das Hauptprodukt der Zersetzung ist CO.

Auf Grund der geringen Reaktionsenthalpie von 19,35 kJ/mol ist davon auszugehen, dass ein geringer Wärmeintrag notwendig ist. Dieser wird von der Vorwärmung auf die genannten 180 °C dominiert. Auch in diesem Fall kann auf Grund des Temperaturniveaus eine Integration der Abwärme des Fischer-Tropsch-Prozesses mit der zweiten Wärmekopplungseinrichtung 119b erfolgen. Für diesen, hier nicht katalysierten Prozess kann ein Verdampfungskessel als vierter Reaktor 14 genutzt werden. Dies ermöglicht ein Ausströmen der Produktgase $NH_3$ und CO sowie des Wasserdampfes. Durch den Wärmeüberträger und die Rückintegration im zweiten Wärmetauscher HR1 wird das Heißdampf-Produktgas-Gemisch auf 84°C abgekühlt. Durch die Kondensation der schwersiedenden Bestandteile, entsteht ein Unterdruck, welcher die Förderung des Dampfgemisches vom vierten Reaktor 14 zum zweiten Wärmetauscher HR1 übernimmt.

Durch die Abkühlung und der damit verbundenen Phasenseparation kann die größtenteils aus Wasser bestehende Phase in der Separationsvorrichtung 17 abgetrennt werden. Um den Wasseranteil im nachfolgenden Aufreinigungsschritt e) im fünften Reaktor 15 zu steuern, wird der Produktstrom lediglich von 84°C auf 68°C abgekühlt.

Der Gasproduktstrom 105b2, welcher das Produktgas beinhaltet gelangt dann in eine den fünften Reaktor 15, wobei in diesem Fall das Ammoniak mit $CO_2$ ausgewaschen wird. Das Resultat ist ein aufgereinigter Produktstrom, welcher einen geringeren Anteil an $NH_3$ enthält. Das im Produktstrom übrig gebliebene $NH_3$ wird durch den der Fischer-Tropsch-Synthese vorrausgehenden kryotechnisches Schritt f) in Coldboxen 16a,b abgetrennt und über eine Vorheizeinrichtung auf 30 °C erhitzt, um im Schritt a) wiederverwendet zu werden. Damit schließt sich der Ammoniakkreislauf des Prozesses. In dem Fall, dass der Purge-Strom 120 aufgereinigt und als Prozesswasserstrom wieder eingespeist wird, ist eine nahezu vollständige Regeneration des Ammoniaks möglich.

In Bezug auf Figur 18 stellt Schritt e) im fünften Reaktor 15 ebenfalls ein Art Ammoniakwäsche dar, in diesem Fall mit dem Ziel, das Produktgas mit CO anzureichern und $NH_3$ möglichst auszufällen. Dies ermöglicht einen geringeren Energieaufwand für die nachgeschaltet hochselektive CO-Aufreinigung in Coldboxen 16a,b vor der Fischer-Tropsch-Synthese. Schritt e) wird hierbei auf einem Temperaturniveau von 30 - 60 °C und einem Druckniveau von 1 bar durchgeführt, da geringe Temperaturen zu einer höheren Ausbeute von Ammoniumcarbonat und damit einem effizienteren Abscheideprozess führen.

Im Folgenden wird die Energiebilanz des Prozesses betrachtet, dabei werden nur die in Figur 18 dargestellten Apparate herangezogen. Die potenziell rezirkulierbaren Ströme 120 und R2 werden nicht berücksichtigt. Der Purge-Strom 120 kann durch Destillation mit Hilfe der Abwärme des Fischer-Tropsch-Prozesses eingedampft werden, wodurch Salze mit niedrigen Wasseranteil in dem Prozess zurückgeführt werden können. Dieser Schritt ist aus simulationstechnischen Gründen nicht Figur 18 der Prozesssimulation enthalten.

Die Prozesssimulation wurde für einen Wasserstoffmassenstrom von 1,3 t/Tag durchgeführt, dies entspricht einer Elektrolyseleistung von 13,1 MW. Die Produktionsleistung an CO des Prozesses beträgt 15,1 t/Tag mit einer Reinheit von 94,1 % (5,8 % Wasserstoff, 555 ppm $NH_3$). Die Eingangsströme des Prozesses betragen neben dem genannten $CO_2$ und Wasserstoffstrom, 9 t/Tag Wasser sowie 6,1 t/Tag Ammoniak.

Für Schritt a) wird von einem Gleichgewicht ausgegangen und dementsprechend die Produkteströme berechnet. Der Umsatz im Reaktionsschritt b) wird auf Literaturbasis (s. oben) zu 80 % bzgl. Ammoniumhydrogencarbonat abgeschätzt. Im Schritt c) wird ein Umsatz von 95 % bzgl. des Formiats angenommen. Für den Reaktionsschritt d) wurde auf Grund der Zersetzungsreaktion im Verdampfungskessel ein Vollumsatz angenommen. 3,7 t/Tag des verwendeten Ammoniaks können direkt gasförmig zurückgeführt werden.

Im rückgeführten Ammoniak-Strom R2 aus Coldboxen 16a,b befinden sich nach dem Vorheizen zudem 1,2 t/Tag Ammoniumionen und 3,9 t/Tag Carbamationen. Umgerechnet auf die zurückgeführte Stoffmenge des Ammoniaks können somit 82 % des genutzten Ammoniaks rezykliert werden. 18 % befinden sich dementsprechend im Purge-Strom 120, welcher ebenfalls aufgereinigt und als Prozesswasser der Wasserelektrolyse zugeführt werden kann.

Die relevanten Komponenten mit deren berechneten Energiebedarf sind in der folgenden Tabelle 4 aufgeführt.

Tabelle 4: Energiebedarf der Vorrichtung gemäß Figur 18 gemäß Simulation

|  | Benötigte Leistung [MW] | Integrierbarkeit |
|---|---|---|
| Erster Reaktor 11 | -0,52 | Kühlleistung |
| Pumpe P | 0,05 | Förderleistung |
| Erste Kühleinrichtung C1 | -0,05 | Kühlleistung |
| Kompressor D | 0,05 | Kompressionsleistung |
| Zweite Kühleinrichtung C2 | -0,05 | Kühlleistung |
| Zweiter Reaktor 12 | 0,13 | Heizleistung, integrierbar mit Fischer-Tropsch |
| Erste Wärmekopplungseinrichtung 119a | 0,48 | Heizleistung, integrierbar mit Fischer-Tropsch |
| Dritter Reaktor 13 | 0,61 | Heizleistung, integrierbar mit Fischer-Tropsch |
| Zweite Wärmekopplungseinrichtung 119b | 0,22 | Heizleistung, integrierbar mit Fischer-Tropsch |
| Vierter Reaktor 14 | 0,29 | Heizleistung, integrierbar mit Fischer-Tropsch |
| Separationsvorrichtung 17 | -0,41 | Kühlleistung |
| Dritte Kühleinrichtung C3 | -0,46 | Kühlleistung |
| Fünfter Reaktor 15 | -0,28 | Kühlleistung |
| Coldbox 16a | -0,21 | Kühlleistung |
| Vorheizeinrichtung E | 0,08 | Kühlleistung |
| Gesamtenergiebedarf | 3,86 | Heizleistung |
| Energiebedarf mit Fischer-Tropsch Integration | 2,14 |  |

Zu beachten ist, das die Coldbox 16b in die Simulation lediglich zur Abtrennung mit vernachlässigbarem Energieaufwand einbezogen wurde.

Der integrierbare Energiebedarf über die Fischer-Tropsch-Anlage beträgt 1,72 MW. Der Nettoenergiebedarf des Prozesses von 2,14 MW steht den Energiebedarf des Wasserstoffs mit 13,1 MW gegenüber. Damit ergibt sich ein Mehraufwand von 16,3 %, um im 13,1 MW Maßstab, 15,1 t/Tag CO bereitzustellen.

Die Ausbeute des CO bzgl. des eingesetzten $CO_2$ des dargestellten Prozesses beträgt 89 %. Das restliche $CO_2$ wird in Form von chemisch oder physikalisch gelösten Spezies über den Purge-Strom 120 ausgeschieden. Die Aufreinigung dieses Stromes ist wie bereits erwähnt möglich.

Beispiel 3

Zur Prozessoptimierung wurden weitere Zersetzungsversuche entsprechend Schritt d) wie in Beispiel 2 mit Formamid durchgeführt, mit folgenden Änderungen im Versuchsaufbau:
60 g Formamid wurde in Autoklaven erhitzt, und das Produktgas durch Säure gespült, um $NH_3$ abzutrennen. Danach wurde das Produktgas im Gaschromatographen (GC) vermessen. Hierdurch wird ein höherer Produktgasstrom und ein schnelleres Einpendeln des Gleichgewichtszustands erreicht.

1. Versuch, Temperatur: 220°C

Nach Öffnung eines Ventils und nach Gleichgewichtseinstellung des Produktstromes wurde dieser im GC vermessen.
Die Ergebnisse der verbleibenden Gase sind in Tabelle 5 gezeigt.

Tabelle 5: Gasanalyse-Ergebnisse für Schritt d) [Vol.%] in Versuch 1

| CO | 94,6% |
|---|---|
| H2 | 2,53% |
| CO2 | 0,44% |
| N2 | 1,43% |
| 02 | 1,03% |
| Gesamt | 100.03% |
| CO:H2 | 37,4 |

2. Versuch, Temperatur: 200°C

Der Druckaufbau in der Apparatur wurde vermessen. Dazu wurde ein Ablassventil geschlossen und Druck wurde in regelmäßigen Abständen gemessen.
Die Ergebnisse hierzu sind in Tabelle 6 gezeigt.

Tabelle 6: Versuchsergebnisse aus Versuch 2

| Zeit t [h] | Druck p [bar] |
|---|---|
| 0 | 0,9 |
| 0,583 | 1,3 |
| 1 | 1,6 |
| 1,25 | 1,7 |
| 2,5 | 2,5 |
| 3,083 | 2,8 |
| 5,25 | 3,7 |
| 5,833 | 4 |
| 17,083 | 7,4 |
| 17,416 | 7,9 |
| 18,5 | 9 |
| 19,083 | 9,9 |
| 19,416 | 10,3 |
| 19,75 | 10,8 |
| 20,75 | 12 |

(fortgesetzt)

| Zeit t [h] | Druck p [bar] |
|---|---|
| 21,25 | 12,6 |

Zur besseren Veranschaulichung sind die Ergebnisse auch in Figur 21 gezeigt, in der der Druck p gegen die Zeit t aufgetragen ist.

Es ergaben sich zwei verschiedene Steigungsraten des Drucks. Zudem wurde bei ca. 13 bar das Produktgasgemisch abgelassen. Bei ca. 7 bar Restdruck (Ablassen führt zu Spülen des Totvolumens) wurde das Produktgas gemessen. Das Ergebnis ist in Tabelle 7 gezeigt.

Tabelle 7: Gasanalyse-Ergebnisse für Schritt d) [Vol.%] in Versuch 2

| | |
|---|---|
| CO | 45,2% |
| H2 | 39,6% |
| CO2 | 6,1% |
| N2 | 0,8% |
| 02 | 8,1% |
| CH4, C2H4, C2H6 | Spuren (0,1%, 0,05%, 0,03%) |
| Gesamt | 99,8% |
| | |
| CO:H2 | 1,14 |

Bei einem Vergleich von Versuch 1 und 2 wird deutlich, dass im Bereich niedriger Drücke (< 7bar) die Decarbonylation die vorranginge Zersetzungsreaktion ist, wobei es bei höheren Drücken (>12bar) zur Dehydration des Formamids kommt.

Das vorliegende Verfahren beruht auf der Kombination von bereits industrialisierten/industrialisierbaren, aber chemisch völlig unabhängig genutzten Produktionsschritten.

Schritt a): Die Aminwäsche wird benutzt um meist saure Gase, z.B. $CO_2$ oder Schwefelwasserstoff, aus Gasgemischen abzutrennen. Verwendet wird dies z.B. bei der Erd- und Biogasaufbereitung ($CO_2$ Abtrennung vom Methan), Direct-Air-Capture Verfahren, Raffinieren und petrochemischen Anlagen.

Schritt b): Die Hydrierung wird vielseitig industriell eingesetzt. In der Lebensmittelindustrie werden Pflanzenöle verarbeitet (C-Doppelbindungen werden reduziert), in der Petrochemie werden Alkene und Aromaten zu gesättigten Alkanen hydriert.

Schritte c) und d): Die thermische Zersetzung kommt bei verschiedensten chemischen Molekülen zum Einsatz, z.B. bei der Produktion von CaO. Zudem wurde die thermische Zersetzung von Dimethylammoniumformiat zur Herstellung von DMF (Dimethylformamid) genutzt. Dies wird als weitreichendes Lösungsmittel verwendet.

Schritt e) Aufreinigung von CO über eine Art "inverse" Aminwäsche

Im Vergleich zu anderen Verfahren zur CO-Herstellung ergeben sich die folgenden Vorteile:

- Alle Schritte sind volumetrisch skalierbar.
- Es werden nur kommerzielle Verfahren eingesetzt, hierfür werden nur kommerzialisierte Materialien eingesetzt.
- Das Produkt kann reines CO sein, bei der $CO_2$ Elektrolyse ist es üblicherweise ein Gemisch aus $CO_2$ und CO, beim Sabatierprozess mit anschließender partieller Oxidation ein CO und $H_2$ Gemisch.
- Die Energieeffizienz kann durch Wärmeintegration deutlich gesteigert werden. Die notwendige Energie fällt hierbei bereits auf dem richtigen Temperaturniveau an.
- Durch die Unterteilung in die einzelnen Schritte ist es möglich die Schritte an den bestmöglichen industriellen Umgebungen durchzuführen.
- Die Lagerung und der Transport von Amid, z.B. Formamid, ist zudem ungefährlicher als der von CO, und die transportierende CO Dichte höher und einfacher.
- Weiterhin muss bei der Zersetzung des Amids, z.B. von Formamid, nicht auf ein Reaktionsgleichgewicht geachtet werden.

Bezugszeichen

| | |
|---|---|
| 1 | Reaktion von Schritt a) |
| 2 | Reaktion von Schritt b) |
| 3 | Reaktion von Schritt c) |
| 3a | Transport des Amids der Formel $HCONR_1R_2$ |
| 4 | Reaktion von Schritt d) |
| 5 | Reaktion und Abtrennung in Schritt e) |
| 6 | Aufreinigung in Schritt f) |
| 7 | Abtrennungsschritt für Lösungsmittel und/oder Wasser |
| 8 | Zwischenschritt der Wasserelektrolyse |
| 9 | Rückführung von Amin der Formel $HNR_1R_2$ |
| 10 | Folgeprozess, z.B. Fischer-Tropsch-Synthese |
| 11 | erster Reaktor |
| 11a | Gaseintragsrührer |
| 11b | Wärmetauscher |
| 11c | Zuleitung für einen Wärmeträger |
| 11d | Ableitung für einen Wärmeträger |
| 12 | zweiter Reaktor |
| 12a | Slurry-Reaktro |
| 12b | Auslass für Gas |
| 13 | dritter Reaktor |
| 13a | kombinierter dritter Reaktor |
| 14 | vierter Reaktor |
| 15 | fünfter Reaktor |
| 16 | sechster Reaktor |
| 16a | Coldbox |
| 16b | Coldbox |
| 17 | Separationsvorrichtung |
| 18 | Wasserelektrolyseeinrichtung |
| 19 | Fischer-Tropsch-Einrichtung |
| | |
| 100 | CO-Produktleitung |
| 101 | erste Leitung |
| 102 | zweite Leitung |
| 102a | Teil der zweiten Leitung in Figur 18 |
| 102b | Teil der zweiten Leitung in Figur 18 |
| 102c | Teil der zweiten Leitung in Figur 18 |
| 102d | Teil der zweiten Leitung in Figur 18 |
| 102e | Teil der zweiten Leitung in Figur 18 |
| 103 | dritte Leitung |
| 103a | Teil der dritten Leitung in Figur 18 |
| 103b | Teil der dritten Leitung in Figur 18 |
| 103c | Teil der dritten Leitung in Figur 18 |
| 104 | vierte Leitung |
| 104a | Teil der vierten Leitung in Figur 18 |
| 104b | Teil der vierten Leitung in Figur 18 |
| 105 | fünfte Leitung |
| 105a | fünfte Teilleitung a vor der Separationsvorrichtung |
| 105a1 | Teil der fünften Teilleitung a in Figur 18 |
| 105a2 | Teil der fünften Teilleitung a in Figur 18 |
| 105a3 | Teil der fünften Teilleitung a in Figur 18 |
| 105b | fünfte Teilleitung b nach der Separationsvorrichtung |
| 105b1 | Teil der fünften Teilleitung b in Figur 18 |
| 105b2 | Teil der fünften Teilleitung b in Figur 18 |
| 106 | sechste Leitung |

| 106a | Teil der sechsten Leitung in Figur 18 |
| 106b | Teil der sechsten Leitung in Figur 18 |
| 115 | erste Verbindungseinrichtung |
| 117 | zweite Verbindungseinrichtung |
| 117a | Teil der zweiten Verbindungseinrichtung in Figur 18 |
| 117b | Teil der zweiten Verbindungseinrichtung in Figur 18 |
| 117c | Teil der zweiten Verbindungseinrichtung in Figur 18 |
| 118 | Wasserstoffleitung |
| 119a | erste Wärmekopplungseinrichtung |
| 119b | zweite Wärmekopplungseinrichtung |
| 120 | Purge-Strom |
| 121 | Gasrezyklierung in Schritt a) in Figur 18 |
| | |
| A | Produktionsteil der Produktion des Amids der Formel $HCONR_1R_2$ |
| B | Produktionsteil der Bildung und Weiterverwendung von CO |
| C1 | Kühleinrichtung |
| C2 | Kühleinrichtung |
| C3 | Produktgas-Kühlvorrichtung |
| C4 | Flüssigstrom-Kühlvorrichtung |
| CO | Kohlenmonoxid |
| CO2 | Kohlendioxid |
| CO2-15 | $CO_2$-Zuführleitung zum fünften Reaktor in Figur 18 |
| D | Kompressor |
| E | Vorheizeinrichtung |
| H2 | Wasserstoff |
| H2-1 | Zuführleitung für Wasserstoff in Figur 18 |
| H2-2 | Zuführleitung für Wasserstoff in Figur 18 |
| H2a | Leitung für Wasserstoff |
| H2O | Wasser |
| HR1 | Zweiter Wärmetauscher |
| HR2 | erster Wärmetauscher |
| MIX1 | Mischeinrichtung |
| NH3 | Ammoniak |
| p | Druck |
| P | Pumpe |
| R1 | erste Rückführeinrichtung |
| R2 | erste Rückführeinrichtung |
| S | $CO_2$-Punktquelle |
| S1 | Tank |
| S23 | Tank |
| SPLIT1 | Flüssigtrennvorrichtung |
| SPLITCO2 | CO2-Splitter |
| t | Zeit |

**Patentansprüche**

**1.** Verfahren zur Herstellung von $CO_2$ aus $CO_2$, umfassend,

a) Reagieren von $CO_2$ mit Wasser und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$;
b) Reagieren des Hydrogencarbonat der Formel $HNR_1R_2H^+ HCO_3^-$ mit Wasserstoff zu einem Formiat der Formel $HNR_1R_2H^+ HCO_2^-$;
c) Zersetzung des Formiats der Formel $HNR_1R_2H^+ HCO_2^-$ zu einem Amid der Formel $HCONR_1R_2$ und $H_2O$;
d) Zersetzung des Amids der Formel $HCONR_1R_2$ zu CO und einem Amin der Formel $HNR_1R_2$, wobei eine Mischung umfassend das Amin der Formel $HNR_1R_2$ und CO entsteht; und
e) zumindest teilweise Reagieren des Amins der Formel $HNR_1R_2$ in der Mischung umfassend das Amin der

Formel $HNR_1R_2$ und CO mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und Abtrennen des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf. unreagiertes Amin der Formel $HNR_1R_2$ entsteht.

2. Verfahren nach Patentanspruch 1, wobei das Produkt umfassend CO und ggf. unreagiertes Amin der Formel $HNR_1R_2$ das unreagierte Amin der Formel $HNR_1R_2$ umfasst, weiter umfassend einen Schritt f) des Abtrennens des CO aus dem Produkt umfassend CO und unreagiertes Amin der Formel $HNR_1R_2$.

3. Verfahren nach Patentanspruch 1 oder 2, wobei das Fällungsreagenz in Schritt e) $CO_2$ ist, wobei das in Schritt e) gebildete Hydrogencarbonat der Formel $HNR_1R_2H^+ HCO_3^-$ Schritt b) zugeführt wird.

4. Verfahren nach einem der vorigen Patentansprüche, wobei die Schritte a) bis d) in einem Lösungsmittel erfolgen.

5. Verfahren nach Patentanspruch 4, wobei das Lösungsmittel zumindest teilweise vor Schritt e) abgetrennt wird, bevorzugt zwischen Schritt d) und Schritt e).

6. Verfahren nach Patentanspruch 5, wobei vor Schritt e) abgetrenntes Lösungsmittel und/oder Wasser aus der Reaktion in Schritt b) und/oder c) zumindest teilweise wieder Schritt a) und/oder im Falle von Wasser ggf. einer Wasserelektrolyse zugeführt wird.

7. Verfahren nach einem der vorigen Patentansprüche, wobei $R_1$ und $R_2$ Wasserstoff sind.

8. Verfahren nach einem der vorigen Patentansprüche, wobei der in Schritt b) verwendete Wasserstoff durch eine Wasserelektrolyse erzeugt wird, welche bevorzugt durch erneuerbare Energien betrieben wird.

9. Verfahren nach einem der vorigen Patentansprüche, wobei in Schritt c) und/oder d) Energie durch eine Weiterreaktion von CO bereitgestellt wird, bevorzugt durch Weiterreaktion von CO in einer Fischer-Tropsch-Synthese.

10. Vorrichtung zur Herstellung von CO aus $CO_2$, umfassend:

- einen ersten Reaktor (11) zur Reaktion von $CO_2$ mit $H_2O$ und einem Amin der Formel $HNR_1R_2$, wobei $R_1$ und $R_2$ gleich oder verschieden sind und ausgewählt sind aus Wasserstoff und substituierten und unsubstituierten Alkylresten mit 1 bis 20 C-Atomen, zu einem Hydrogencarbonat der Formel $HNR_1R_2H^+ HCO_3^-$, der dazu ausgebildet ist $CO_2$ mit $H_2O$ und einem Amin der Formel $HNR_1R_2$ zu reagieren;
- einen zweiten Reaktor (12) zur Reaktion des Hydrogencarbonats der Formel $HNR_1R_2H^+ HCO_3^-$ mit Wasserstoff zu einem Formiat der Formel $HNR_1R_2H^+ HCO_2^-$, der dazu ausgebildet ist, das Hydrogencarbonat der Formel $HNR_1R_2H^+ HCO_3^-$ mit Wasserstoff zu einem Formiat der Formel $HNR_1R_2H^+ HCO_2^-$ zu reagieren; weiter umfassend
- einen dritten Reaktor (13) zur Zersetzung des Formiats der Formel $HNR_1R_2H^+ HCO_2^-$ zu $H_2O$ und einem Amid der Formel $HCONR_1R_2$, der dazu ausgebildet ist, das Formiat der Formel $HNR_1R_2H^+ HCO_2^-$ zu $H_2O$ und einem Amid der Formel $HCONR_1R_2$ zu zersetzen, und
- einen vierten Reaktor (14) zur Zersetzung des Amids der Formel $HCONR_1R_2$ zu CO und einem Amin der Formel $HNR_1R_2$, der dazu ausgebildet ist, das Amid der Formel $HCONR_1R_2$ zu CO und einem Amin der Formel $HNR_1R_2$ zu zersetzen; oder
- einen kombinierten dritten Reaktor (13a) zur Zersetzung des Formiats der Formel $HNR_1R_2H^+ HCO_2^-$ zu $H_2O$, CO und einem Amin der Formel $HNR_1R_2$, der dazu ausgebildet ist, das Formiat der Formel $HNR_1R_2H^+ HCO_2^-$ zu $H_2O$, CO und einem Amin der Formel $HNR_1R_2$ zu zersetzen; weiter umfassend
- einen fünften Reaktor (15) zur zumindest teilweisen Reaktion des im kombinierten dritten Reaktor (13a) oder im vierten Reaktor (14) erzeugten Amins der Formel $HNR_1R_2$ mit einem Fällungsreagenz, bevorzugt mit $CO_2$, zur Herstellung einer Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt einer Mischung umfassend CO, ein Hydrogencarbonat der Formel $HNR_1R_2H^+ HCO_3^-$ und ggf. unreagiertes Amin der Formel $HNR_1R_2$, und zur Abtrennung des Fällungsprodukts der Reaktion des Amins der Formel $HNR_1R_2$ mit dem Fällungsreagenz, bevorzugt des Hydrogencarbonats der Formel $HNR_1R_2H^+ HCO_3^-$, wobei ein Produkt umfassend CO und ggf.

unreagiertes Amin der Formel $HNR_1R_2$ entsteht, wobei der fünfte Reaktor (15) dazu ausgebildet ist, das im kombinierten dritten Reaktor (13a) oder im vierten Reaktor (14) erzeugte Amin der Formel $HNR_1R_2$ mit einem Fällungsreagenz, bevorzugt mit $CO_2$, zumindest teilweise zur Reaktion zur bringen, wobei eine Mischung umfassend CO, ein Fällungsprodukt der Reaktion des Amins der Formel $HNR_1R_2$ mit dem Fällungsreagenz und ggf. unreagiertes Amin der Formel $HNR_1R_2$, bevorzugt eine Mischung umfassend CO, ein Hydrogencarbonat der Formel $HNR_1R_2H^+ HCO_3^-$ und ggf. unreagiertes Amin der Formel $HNR_1R_2$, hergestellt wird, und wobei der fünfte Reaktor (15) zudem dazu ausgebildet ist, das Fällungsprodukt der Reaktion des Amins der Formel $HNR_1R_2$ mit dem Fällungsreagenz, bevorzugt das Hydrogencarbonat der Formel $HNR_1R_2H^+ HCO_3^-$, abzutrennen.

11. Vorrichtung nach Patentanspruch 10, wobei ein Produkt umfassend CO und unreagiertes Amin der Formel $HNR_1R_2$ entsteht, weiter umfassend einen sechsten Reaktor (16) zur Abtrennung von CO aus dem Produkt umfassend CO und unreagiertes Amin der Formel $HNR_1R_2$, der dazu ausgebildet ist, aus dem Produkt umfassend CO und unreagiertes Amin der Formel $HNR_1R_2$ CO abzutrennen.

12. Vorrichtung nach Patentanspruch 10 oder 11, wobei im fünften Reaktor (15) das Hydrogencarbonat der Formel $HNR_1R_2H^+ HCO_3^-$ gebildet wird, weiter umfassend eine erste Verbindungseinrichtung (115) zwischen dem fünften Reaktor (15) und dem zweiten Reaktor (12) zur Zuführung des im fünften Reaktor (15) gebildeten Hydrogencarbonats der Formel $HNR_1R_2H^+ HCO_3^-$ vom fünften Reaktor (15) zum zweiten Reaktor (12), die dazu ausgebildet ist, im fünften Reaktor (15) gebildetes Hydrogencarbonat der Formel $HNR_1R_2H^+ HCO_3^-$ vom fünften Reaktor (15) zum zweiten Reaktor (12) zu führen.

13. Vorrichtung nach einem der Patentansprüche 10 bis 12, weiter umfassend eine Separationsvorrichtung (17), die in Strömungsrichtung zwischen dem vierten Reaktor (14) und dem fünften Reaktor (15) angeordnet und dazu ausgebildet ist, ein Lösungsmittel und/oder Wasser von dem CO und dem Amin der Formel $HNR_1R_2$ zumindest teilweise abzutrennen.

14. Vorrichtung nach Patentanspruch 13, weiter umfassend eine zweite Verbindungseinrichtung (117) zwischen der Separationsvorrichtung (17) und dem ersten Reaktor (11), welche dazu ausgebildet ist, in der Separationsvorrichtung (17) abgetrenntes Lösungsmittel dem ersten Reaktor (11) zuzuführen.

15. Vorrichtung nach einem der Patentansprüche 10 bis 14, weiter umfassend eine Wasserelektrolyseeinrichtung (18), die dazu ausgebildet ist, Wasser zu elektrolysieren und dem zweiten Reaktor (12) Wasserstoff bereitzustellen.

**Claims**

1. Process for producing CO from $CO_2$, comprising

    a) reacting $CO_2$ with water and an amine of the formula $HNR_1R_2$ where $R_1$ and $R_2$ are the same or different and are selected from hydrogen and substituted and unsubstituted alkyl radicals having 1 to 20 carbon atoms to give a hydrogencarbonate of the formula $HNR_1R_2H^+ HCO_3^-$;
    b) reacting the hydrogencarbonate of the formula $HNR_1R_2H^+ HCO_3^-$ with hydrogen to give a formate of the formula $HNR_1R_2H^+ HCO_2^-$;
    c) decomposing the formate of the formula $HNR_1R_2H^+ HCO_2^-$ to give an amide of the formula $HCONR_1R_2$ and $H_2O$;
    d) decomposing the amide of the formula $HCONR_1R_2$ to give CO and an amine of the formula $HNR_1R_2$, giving rise to a mixture comprising the amine of the formula $HNR_1R_2$ and CO; and
    e) at least partly reacting the amine of the formula $HNR_1R_2$ in the mixture comprising the amine of the formula $HNR_1R_2$ and CO with a precipitation reagent, preferably with $CO_2$, for production of a mixture comprising CO and a precipitation product of the reaction of the amine of the formula $HNR_1R_2$ with the precipitation reagent, with or without unreacted amine of the formula $HNR_1R_2$, preferably a mixture comprising CO and a hydrogencarbonate of the formula $HNR_1R_2H^+ HCO_3^-$, with or without unreacted amine of the formula $HNR_1R_2$, and separating off the precipitation product of the reaction of the amine of the formula $HNR_1R_2$ with the precipitation reagent, preferably of the hydrogencarbonate of the formula $HNR_1R_2H^+ HCO_3^-$, giving rise to a product comprising CO, with or without unreacted amine of the formula $HNR_1R_2$.

2. Process according to Patent Claim 1, wherein the product comprising CO, with or without unreacted amine of the formula $HNR_1R_2$, comprises the unreacted amine of the formula $HNR_1R_2$, further comprising a step f) of separating the CO from the product comprising CO and unreacted amine of the formula $HNR_1R_2$.

3. Process according to Patent Claim 1 or 2, wherein the precipitation reagent in step e) is $CO_2$, wherein the hydrogencarbonate of the formula $HNR_1R_2H^+ HCO_3^-$ which is formed in step e) is sent to step b).

4. Process according to any of the preceding patent claims, wherein steps a) to d) are effected in a solvent.

5. Process according to Patent Claim 4, wherein the solvent is at least partly separated off before step e), preferably between step d) and step e).

6. Process according to Patent Claim 5, wherein solvent separated off before step e) and/or water from the reaction in step b) and/or c) is at least partly fed back to step a) and/or, in the case of water, optionally to a water electrolysis.

7. Process according to any of the preceding patent claims, wherein $R_1$ and $R_2$ are hydrogen.

8. Process according to any of the preceding patent claims, wherein the hydrogen used in step b) is produced by a water electrolysis which is preferably conducted by renewable energies.

9. Process according to any of the preceding patent claims, wherein energy is provided in step c) and/or d) by a further reaction of CO, preferably by further reaction of CO in a Fischer-Tropsch synthesis.

10. Apparatus for production of CO from $CO_2$, comprising

   - a first reactor (11) for reaction of $CO_2$ with $H_2O$ and an amine of the formula $HNR_1R_2$ where $R_1$ and $R_2$ are the same or different and are selected from hydrogen and substituted and unsubstituted alkyl radicals having 1 to 20 carbon atoms to give a hydrogencarbonate of the formula $HNR_1R_2H^+ HCO_3^-$, which is designed to react $CO_2$ with $H_2O$ and an amine of the formula $HNR_1R_2$;
   - a second reactor (12) for reaction of the hydrogencarbonate of the formula $HNR_1R_2H^+ HCO_3^-$ with hydrogen to give a formate of the formula $HNR_1R_2H^+ HCO_2^-$, which is designed to react the hydrogencarbonate of the formula $HNR_1R_2H^+ HCO_3^-$ with hydrogen to give a formate of the formula $HNR_1R_2H^+ HCO_2^-$; further comprising
   - a third reactor (13) for decomposition of the formate of the formula $HNR_1R_2H^+ HCO_2^-$ to $H_2O$ and an amide of the formula $HCONR_1R_2$, which is designed to decompose the formate of the formula $HNR_1R_2H^+ HCO_2^-$ to $H_2O$ and an amide of the formula $HCONR_1R_2$, and
   - a fourth reactor (14) for decomposition of the amide of the formula $HCONR_1R_2$ to CO and an amine of the formula $HNR_1R_2$, which is designed to decompose the amide of the formula $HCONR_1R_2$ to CO and an amine of the formula $HNR_1R_2$; or
   - a combined third reactor (13a) for decomposition of the formate of the formula $HNR_1R_2H^+ HCO_2^-$ to $H_2O$, CO and an amine of the formula $HNR_1R_2$, which is designed to decompose the formate of the formula $HNR_1R_2H^+ HCO_2^-$ to $H_2O$, CO and an amine of formula $HNR_1R_2$; further comprising
   - a fifth reactor (15) for at least partial reaction of the amine of the formula $HNR_1R_2$ produced in the combined third reactor (13a) or in the fourth reactor (14) with a precipitation reagent, preferably with $CO_2$, for production of a mixture comprising CO, a precipitation product of the reaction of the amine of the formula $HNR_1R_2$ with the precipitation reagent and any unreacted amine of the formula $HNR_1R_2$, preferably a mixture comprising CO, a hydrogencarbonate of the formula $HNR_1R_2H^+ HCO_3^-$ and any unreacted amine of the formula $HNR_1R_2$, and for removal of the precipitation product of the reaction of the amine of the formula $HNR_1R_2$ with the precipitation reagent, preferably of the hydrogencarbonate of the formula $HNR_1R_2H^+ HCO_3^-$, to form a product comprising CO, with or without unreacted amine of the formula $HNR_1R_2$, wherein the fifth reactor (15) is designed to at least partly react the amine of the formula $HNR_1R_2$ produced in the combined third reactor (13a) or in the fourth reactor (14) with a precipitation reagent, preferably with $CO_2$, to produce a mixture comprising CO, a precipitation product of the reaction of the amine of the formula $HNR_1R_2$ with the precipitation reagent and any unreacted amine of the formula $HNR_1R_2$, preferably a mixture comprising CO, a hydrogencarbonate of the formula $HNR_1R_2H^+ HCO_3^-$ and any unreacted amine of the formula $HNR_1R_2$, and wherein the fifth reactor (15) is additionally designed for removal of the precipitation product of the reaction of the amine of the formula $HNR_1R_2$ with the precipitation reagent, preferably the hydrogencarbonate of the formula $HNR_1R_2H^+ HCO_3^-$.

11. Apparatus according to Patent Claim 10, wherein a product comprising CO and unreacted amine of the formula $HNR_1R_2$ is formed, further comprising a sixth reactor (16) for separation of CO from the product comprising CO and unreacted amine of the formula $HNR_1R_2$, which is designed to separate CO from the product comprising CO and unreacted amine of the formula $HNR_1R_2$.

**12.** Apparatus according to Patent Claim 10 or 11, wherein the hydrogencarbonate of the formula $HNR_1R_2H^+ HCO_3^-$ is formed in the fifth reactor (15), further comprising a first connecting device (115) between the fifth reactor (15) and the second reactor (12) for supply of the hydrogencarbonate of the formula $HNR_1R_2H^+ HCO_3^-$ formed in the fifth reactor (15) from the fifth reactor (15) to the second reactor (12), which is designed to conduct hydrogencarbonate of the formula $HNR_1R_2H^+ HCO_3^-$ formed in the fifth reactor (15) from the fifth reactor (15) to the second reactor (12).

**13.** Apparatus according to any of Patent Claims 10 to 12, further comprising a separation apparatus (17) disposed between the fourth reactor (14) and the fifth reactor (15) in flow direction and designed to at least partly separate a solvent and/or water from the CO and the amine of the formula $HNR_1R_2$.

**14.** Apparatus according to Patent Claim 13, further comprising a second connecting device (117) between the separation apparatus (17) and the first reactor (11), which is designed to feed solvent separated off in the separation apparatus (17) to the first reactor (11).

**15.** Apparatus according to any of Patent Claims 10 to 14, further comprising a water electrolysis device (18) which is designed to electrolyse water and to provide the second reactor (12) with hydrogen.

## Revendications

**1.** Procédé de production de CO à partir de $CO_2$, comprenant,

a) réaction de $CO_2$ sur de l'eau et une amine de formule $HNR_1R_2$, dans laquelle $R_1$ et $R_2$ sont les mêmes ou sont différents et sont choisis parmi l'hydrogène et des radicaux alcoyles substitués et non substitués ayant de 1 à 20 atomes de C, pour donner un bicarbonate de formule $HNR_1R_2H^+ HCO_3^-$ ;
b) réaction du bicarbonate de formule $HNR_1R_2H^+ HCO_3^-$ sur l'hydrogène pour donner un formiate de formule $HNR_1R_2H^+ HCO_2^-$ ;
c) décomposition du formiate de formule $HNR_1R_2H^+ HCO_2^-$ en un amide de formule $HCONR_1R_2$ et en $H_2O$ ;
d) décomposition de l'amide de formule $HCONR_1R_2$ en du CO et en une amine de formule $HNR_1R_2$, un mélange comprenant l'amine de formule $HNR_1R_2$ et du CO étant créé ; et
e) réaction au moins partielle de l'amine de formule $HNR_1R_2$ du mélange comprenant l'amine de formule $HNR_1R_2$ et du CO sur un réactif de précipitation, de préférence sur du $CO_2$, pour la production d'un mélange comprenant du CO, un produit de précipitation de la réaction de l'amine de formule $HNR_1R_2$ sur le réactif de précipitation et, le cas échéant, de l'amine n'ayant pas réagi de formule $HNR_1R_2$, de préférence un mélange comprenant du CO, un bicarbonate de formule $HNR_1R_2H^+ HCO_3^-$ et, le cas échéant, de l'amine n'ayant pas réagi de formule $HNR_1R_2$ et séparation du produit de précipitation de la réaction de l'amine de formule $HNR_1R_2$ sur le réactif de précipitation, de préférence du bicarbonate de formule $HNR_1R_2H^+ HCO_3^-$, un produit comprenant du CO et, le cas échéant, de l'amine n'ayant pas réagi de formule $HNR_1R_2$ étant créé.

**2.** Procédé suivant la revendication 1, dans lequel le produit comprenant du CO et, le cas échéant, de l'amine n'ayant pas réagi de formule $HNR_1R_2$ comprend l'amine n'ayant pas réagi de formule $HNR_1R_2$, comprenant en outre un stade f) de séparation du CO du produit comprenant du CO et de l'amine n'ayant pas réagi de formule $HNR_1R_2$.

**3.** Procédé suivant la revendication 1 ou 2, dans lequel le réactif de précipitation dans le stade e) est du $CO_2$, dans lequel on envoie, au stade b), le bicarbonate de formule $HNR_1R_2H^+ HCO_3^-$ formé au stade e) .

**4.** Procédé suivant l'une des revendications précédentes, dans lequel on effectue les stades a) à d) dans un solvant.

**5.** Procédé suivant la revendication 4, dans lequel on sépare le solvant au moins en partie avant le stade e), de préférence entre le stade d) et le stade e).

**6.** Procédé suivant la revendication 5, dans lequel on envoie du solvant séparé avant le stade e) et/ou de l'eau de la réaction dans le stade b) et/ou c) au moins en partie à nouveau au stade a) et/ou dans le cas de l'eau, le cas échéant, à une électrolyse de l'eau.

**7.** Procédé suivant l'une des revendications précédentes, dans lequel $R_1$ et $R_2$ sont de l'hydrogène.

8. Procédé suivant l'une des revendications précédentes, dans lequel on produit l'hydrogène utilisé au stade b) par une électrolyse de l'eau que l'on fait fonctionner, de préférence par des énergies renouvelables.

9. Procédé suivant l'une des revendications précédentes, dans lequel, dans le stade c) et/ou d), on met de l'énergie à disposition par une autre réaction du CO, de préférence, par une autre réaction du CO dans une synthèse de Fischer Tropsch.

10. Installation de production de CO à partir de $CO_2$, comprenant :

- un premier réacteur (11) de réaction de $CO_2$ sur de l'$H_2O$ et une amine de formule $HNR_1R_2$, dans laquelle $R_1$ et $R_2$ sont les mêmes ou sont différents et sont choisis parmi l'hydrogène et des radicaux alcoyles substitués et non substitués ayant de 1 à 20 atomes de C, pour donner un bicarbonate de formule $HNR_1R_2H^+ HCO_3^-$, qui est constitué pour faire réagir du $CO_2$ sur de l'$H_2O$ et une amine de formule $HNR_1R_2$ ;
- un deuxième réacteur (12) de réaction du bicarbonate de formule $HNR_1R_2H^+ HCO_3^-$ sur l'hydrogène pour donner un formiate de formule $HNR_1R_2H^+ HCO_2^-$, qui est constitué pour faire réagir le bicarbonate de formule $HNR_1R_2H^+ HCO_3^-$ sur l'hydrogène pour donner un formiate de formule $HNR_1R_2H^+ HCO_2^-$ ; comprenant en outre
- un troisième réacteur (13) de décomposition du formiate de formule $HNR_1R_2H^+ HCO_2^-$ en de l'$H_2O$ et en un amide de formule $HCONR_1R_2$, qui est constitué pour décomposer le formiate de formule $HNR_1R_2H^+ HCO_2^-$ en $H_2O$ et en un amide de formule $HCONR_1R_2$, et
- un quatrième réacteur (14) de décomposition de l'amide de formule $HCONR_1R_2$ en du CO et en une amine de formule $HNR_1R_2$, qui est constitué pour décomposer l'amide de formule $HCONR_1R_2$ en du CO et en une amine de formule $HNR_1R_2$ ; ou
- un troisième réacteur (13a) combiné de décomposition du formiate de formule $HNR_1R_2H^+ HCO_2^-$ en de l'$H_2O$, du CO et une amine de formule $HNR_1R_2$, qui est constitué pour décomposer le formiate de formule $HNR_1R_2H^+ HCO_2^-$ en $H_2O$, CO et une amine de formule $HNR_1R_2$ ; comprenant en outre
- un cinquième réacteur (15) de réaction au moins partielle de l'amine de formule $HNR_1R_2$ produite dans le troisième réacteur (13a) combiné ou dans le quatrième réacteur (14) sur un réactif de précipitation, de préférence sur du $CO_2$, pour la production d'un mélange comprenant du CO, un produit de précipitation de la réaction de l'amine de formule $HNR_1R_2$ sur le réactif de précipitation et, le cas échéant, de l'amine n'ayant pas réagi de formule $HNR_1R_2$, de préférence un mélange comprenant du CO, un bicarbonate de formule $HNR_1R_2H^+ HCO_3^-$ et, le cas échéant, de l'amine n'ayant pas réagi de formule $HNR_1R_2$, et de séparation du produit de précipitation de la réaction de l'amine de formule $HNR_1R_2$ sur le réactif de précipitation, de préférence du bicarbonate de formule $HNR_1R_2H^+ HCO_3^-$, un produit comprenant du CO et, le cas échéant, de l'amine n'ayant pas réagi de formule $HNR_1R_2$ étant créé, dans laquelle le cinquième réacteur (15) est constitué en outre pour mettre en réaction, au moins en partie, l'amine de formule $HNR_1R_2$, produite dans le troisième réacteur (13a) combiné ou dans le quatrième réacteur (14), sur un réactif de précipitation, de préférence sur du $CO_2$, dans laquelle on produit un mélange comprenant du CO, un produit de précipitation de la réaction de l'amine de formule $HNR_1R_2$ sur le réactif de précipitation et, le cas échéant, de l'amine n'ayant pas réagi de formule $HNR_1R_2$, de préférence du mélange comprenant du CO, un bicarbonate de formule $HNR_1R_2H^+ HCO_3^-$ et, le cas échéant, de l'amine n'ayant pas réagi de formule $HNR_1R_2$, et dans laquelle le cinquième réacteur (15) est constitué en outre pour séparer le produit de précipitation de la réaction de l'amine de formule $HNR_1R_2$ sur le réactif de précipitation, de préférence le bicarbonate de formule $HNR_1R_2H^+ HCO_3^-$.

11. Installation suivant la revendication 10, dans laquelle il est créé un produit comprenant du CO et de l'amine n'ayant pas réagi de formule $HNR_1R_2$, comprenant en outre un sixième réacteur (16) de séparation du CO du produit comprenant du CO et de l'amine n'ayant pas réagi de formule $HNR_1R_2$, qui est constitué pour séparer du CO du produit comprenant du CO et de l'amine n'ayant pas réagi de formule $HNR_1R_2$.

12. Installation suivant la revendication 10 ou 11, dans laquelle, dans le cinquième réacteur (15), on forme le bicarbonate de formule $HNR_1R_2H^+ HCO_3^-$, comprenant en outre un dispositif (115) de communication entre le cinquième réacteur (15) et le deuxième réacteur (12) pour envoyer le bicarbonate de formule $HNR_1R_2H^+ HCO_3^-$ formé dans le cinquième réacteur (15) du cinquième réacteur (15) au deuxième réacteur (12), qui est constitué pour envoyer du bicarbonate de formule $HNR_1R_2H^+ HCO_3^-$ formé dans le cinquième réacteur (15) du cinquième réacteur (15) au deuxième réacteur (12) .

13. Installation suivant l'une des revendications 10 à 12, comprenant en outre une installation (17) de séparation, qui est disposée dans le sens du courant entre le quatrième réacteur (14) et le cinquième réacteur (15) et qui est constituée pour séparer au moins en partie un solvant et/ou de l'eau du CO et de l'amine de formule $HNR_1R_2$.

**14.** Installation suivant la revendication 13, comprenant en outre un deuxième dispositif (117) de communication entre l'installation (17) de séparation et le premier réacteur (11), qui est constitué pour envoyer au premier réacteur (11) du solvant séparé dans l'installation (17) de séparation.

**15.** Installation suivant l'une des revendications 10 à 14, comprenant en outre un dispositif (18) d'électrolyse de l'eau, qui est constitué pour électrolyser de l'eau et pour disposer d'hydrogène dans le deuxième réacteur (12).

FIG 1

$CO_2 \downarrow$     $\downarrow H_2O$

$$1 \qquad \boxed{\begin{array}{c} HNR_1R_2 + CO_2 + H_2O \rightarrow \\ HNR_1R_2H^+ + HCO_3^- \end{array}}$$

$$8 \qquad \boxed{H_2O \rightarrow H_2 + 1/2\ O_2} \rightarrow \boxed{\begin{array}{c} 2 \\ HNR_1R_2H^+ + HCO_3^- + H_2 \rightarrow \\ HNR_1R_2H^+ + HCO_2^- + H_2O \end{array}}$$

$$3 \qquad \boxed{\begin{array}{c} HNR_1R_2H^+ + HCO_2^- \rightarrow \\ HCONR_1R_2 + H_2O \end{array}}$$

$$4 \qquad \boxed{HCONR_1R_2 \rightarrow CO + HNR_1R_2}$$

$9$

$HNR_1R_2$

$CO \leftarrow$

FIG 2

$$HNR_1R_2 + CO_2 + H_2O \rightarrow HNR_1R_2H^+ + HCO_3^-$$

$$H_2O \rightarrow H_2 + 1/2\,O_2$$

$$HNR_1R_2H^+ + HCO_3^- + H_2 \rightarrow HNR_1R_2H^+ + HCO_2^- + H_2O$$

$$HNR_1R_2H^+ + HCO_2^- \rightarrow HCONR_1R_2 + H_2O$$

$$HNR_1R_2$$

$$HCONR_1R_2$$

$$HCONR_1R_2 \rightarrow CO + HNR_1R_2$$

EP 4 132 880 B1

## FIG 3

$CO_2$

| 1 |
| 2 |
| 3 |
| 4 |
| 5 |

CO

## FIG 4

$CO_2$

| 1 |
| 2 |
| 3a |
| 5 |

CO

FIG 5 · FIG 6

FIG 7

$CO_2$

| | |
|---|---|
| | 1 |

8

| | |
|---|---|
| | 2 |

| | |
|---|---|
| | 3 |

| | |
|---|---|
| | 4 |

| | |
|---|---|
| | 5 |

CO

FIG 8

$CO_2$

101

11

102

12

103

13

104

14

105

15

100

CO

FIG 9

$CO_2$

101

11

102

12

103

13

104

14

105

15

115

100

CO

## FIG 10

$CO_2$
↓ ~101

| | ~11

↓ ~102

| | ~12

↓ ~103

| | ~13a

↓ ~105

| | ~15

↓ ~100

CO

## FIG 11

$CO_2$
↓ ~101

| | ~11

↓ ~102

| | ~12

↓ ~103

| | ~13

↓ ~104

| | ~14

↓ ~105

| | ~15

↓ ~106

| | ~16

↓ ~100

CO

# FIG 12

CO$_2$

↓ ⌇101

| | ⌇11 |

↓ ⌇102

| | ⌇12 |

↓ ⌇103

| | ⌇13 |

↓ ⌇104

| | ⌇14 |

↓ ⌇105

| | ⌇15 |

⌇115

↓ ⌇106

| | ⌇16 |

↓ ⌇100

CO

# FIG 13

CO$_2$

↓ ⌇101

| | ⌇11 |

↓ ⌇102

| | ⌇12 |

↓ ⌇103

| | ⌇13 |

↓ ⌇104

| | ⌇14 |

↓ ⌇105a

| | ⌇17 |

↓ ⌇105b

| | ⌇15 |

↓ ⌇106

| | ⌇16 |

↓ ⌇100

CO

# FIG 14

$CO_2$

101

11

102

12

103

13 — 117

104

14

105a

17

105b

15

106

16

100

CO

FIG 15

$CO_2$

101

11

18

118

102

12

103

13

104

14

105

15

100

CO

**FIG 16**

## FIG 17

FIG 18

## FIG 19

## FIG 20

FIG 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9181625 B2
- US 9555367 B2
- US 8562811 B2
- US 1582675 A

**In der Beschreibung aufgeführte Nicht-Patentliteratur**

- **LIU et al.** CO2 Electrolysis to CO and O2 at High Selectivity, Stability and Efficiency Using Sustainion Membranes. *Journal of Electrochemical Society,* 2018, vol. 165 (15), J3371-J3377
- **SHAKERIAN FARID et al.** *APPLIED ENERGY,* 27. Marz 2015, vol. 148, 10-22
- **KLANKERMAYER JÜRGEN et al.** *Angewandte Chemie,* 20. Juni 2016, vol. 128 (26), 7416-7467
- **JENS CHRISTIAN M. et al.** *Green Chemistry,* 01. Januar 2016, vol. 18, 5621-5629
- **SU et al.** Highly Efficient Hydrogen Storage System Based on Ammonium Bicarbonate/Formate Redox Equilibrium over Palladium Nanocatalysts. *ChemSusChem,* 2015, vol. 8, 813-816
- **LITERATUR WIENER et al.** The Heterogeneous Catalytic Hydrogenation of Bicarbonate to Formate in Aqueous Solutions. *Journal of Catalysis,* 1988, vol. 110, 184-190
- **M. SCHALENBACH ; G. TJARKS ; M. CARMO ; W. LUEKE ; M. MUELLER ; D. STOLTEN.** *J. Electrochem. Soc.,* 2016, 163
- **Z.B. LIU et al.** CO2 Electrolysis to CO and O2 at High Selectivity, Stability and Efficiency Using Sustainion Membranes. *Journal of Electrochemical Society,* 2018, vol. 165 (15), J3371-J3377
- **SCHWAB, G.-M.** Über den Zerfall von Formamid. *Z. Anorg. Chem.,* 1950, vol. 262, 41-48